# EUROPEAN PATENT APPLICATION

(11) **EP 1 978 585 A1**
(43) Date of publication of application: **08.10.2008**
(21) Application number: 07707370.8
(22) Date of filing: 18.01.2007
(51) Int. Cl.: H01M 8/02, H01M 8/10

(54) **FUEL CELL**

(30) Priority: 19.01.2006 JP 2006011204; 14.03.2006 JP 2006069306
(71) Applicant: Toyota Jidosha Kabushiki Kaisha, Toyota-shi, Aichi 471-8571 (JP)
(72) Inventor: SHIBATA, Kazunori, Aichi 471-8571 (JP); OGAWA, Tomohiro, Aichi 471-8571 (JP)
(74) Representative: Albutt, Anthony John
(86) International application number: PCT/JP2007/051123
(87) International publication number: WO 2007/083838

(57) **Abstract**

In a fuel cell stack, each separator is constructed by sequentially stacking and joining an anode-facing plate 42, a middle plate 43, and a cathode-facing plate 44. The anode-facing plate 42 has multiple hydrogen inlets 422i arranged in a two-dimensionally distributed manner on its plate surface. This arrangement effectively prevents a decrease of power generation capacity due to local accumulation of water produced in the course of electrochemical reaction for power generation or other impurities on the surface of either an anode or a cathode.

## Description

### FUEL CELLS

### TECHNICAL FIELD

The present invention relates to fuel cells and more specifically to fuel cells having a stack structure of multiple cell laminates stacked via separators, where each cell laminate has an anode and a cathode formed on the opposed faces of a proton-conductive electrolyte membrane.

### BACKGROUND ART

Fuel cells generating electric power through electrochemical reaction of hydrogen with oxygen have been noted as an efficient energy source. As disclosed in Japanese Patent Laid-Open No. 2003-68318, one typical arrangement of such fuel cells is a stack structure where membrane electrode assemblies and separators are alternately arranged and each membrane electrode assembly has an anode (hydrogen electrode) and a cathode (oxygen electrode) formed on opposed faces of a proton-conductive electrolyte membrane (the fuel cells of the stack structure are referred to as 'fuel cell stack').

Various techniques have been proposed for the structure of the separator adopted in the fuel cell stack. For example, one proposed structure of the separator disclosed in Japanese Patent Laid-Open No. 2004-6104 includes a fuel gas plate opposed to the anode, an oxidizing gas plate opposed to the cathode, and a middle plate located between the fuel gas plate and the oxidizing gas plate. In this proposed technique, the respective plates are designed to have structural elements for supplying a fuel gas and an oxidizing gas to the fuel cells and for allowing a flow of a cooling medium for cooling down the fuel cells. The fuel gas and the oxidizing gas are introduced into the anode and the cathode from specific parts of the respective peripheries of the anode and the cathode to be supplied substantially homogeneously over the whole surface of the anode and the whole surface of the cathode.

In the fuel cells, water is produced in the course of the electrochemical reaction of hydrogen with oxygen for power generation. The produced water is generally discharged out with an exhaust gas. In some operating conditions, however, the produced water is locally accumulated on the surface of the anode or on the surface of the cathode and partly blocks the fuel gas (hydrogen) passage or the oxidizing gas (oxygen) passage. Such blocking of the gas passage undesirably interferes with the homogeneous supply of the fuel gas or the oxidizing gas over the whole surface of the anode or the whole surface of the cathode and may decrease the power generation capacity of the fuel cells. The problem of the decreasing power generation capacity is not uniquely caused by the local accumulation of the produced water but is also induced by local accumulation of unreacted gas components unused for the electrochemical reaction of power generation (for example, nitrogen included in the oxygen-containing air used as the oxidizing gas) on the surface of the anode or on the surface of the cathode.

In the fuel cells, it is essential to keep the electrolyte membrane moist for the favorable power generation performance. The electrolyte membrane is kept moist, for example, by humidifying the reactive gases (the fuel gas and the oxidizing gas).

In the case of supply of the humidified reactive gases from the specific parts of the peripheries of the catalyst electrodes (the anode and the cathode) in the fuel cells, the reactive gases may not be fully fed over the whole faces of the catalyst electrodes. This leads to insufficient humidification in some part of the electrolyte membrane. The insufficient humidification may cause the electrolyte membrane to be locally dried and deteriorate the cell performance of the fuel cells.

In the fuel cell stack, there would thus be a demand for preventing a decrease of power generation capacity due to local accumulation of at least water produced in the course of electrochemical reaction for power generation on the surface of the anode or on the surface of the cathode. There would also be a demand for preventing the electrolyte membrane from being locally dried in the fuel cells.

### DISCLOSURE OF THE INVENTION

The present invention accomplishes at least part of the demands mentioned above and the other relevant demands by the following configuration. According to one aspect, the invention pertains to a fuel cell stack having a stack structure of multiple cell laminates stacked via separators, where each cell laminate has an anode and a cathode formed on opposed faces of a proton-conductive electrolyte membrane. The separator includes: an anode-facing plate opposed to the anode of the cell laminate; and a cathode-facing plate opposed to the cathode of the cell laminate. At least one of the anode-facing plate and the cathode-facing plate has multiple reactive gas inlets formed to penetrate the plate in a thickness direction and arranged to supply a preset reactive gas to a surface of each cell laminate in a direction substantially perpendicular to the surface of the cell laminate. The multiple reactive gas inlets are arranged in a two-dimensionally distributed manner on a plate surface of the at least one of the anode-facing plate and the cathode-facing plate.

The 'preset reactive gas' represents both a fuel gas and an oxidizing gas respectively supplied to an anode and to a cathode in the cell laminate constructed as a membrane electrode assembly.

In the structure of the fuel cell stack according to the above aspect of the invention, the reactive gas is introduced through the multiple reactive gas inlets and is supplied in a two-dimensionally distributed manner to the surface of each cell laminate or more specifically to the surface of at least one of the anode and the cathode of each membrane electrode assembly. This arrangement effectively prevents water produced in the course of electrochemical reaction for power generation from being locally accumulated on the surface of at least one of the anode and the cathode and blocking the reactive gas passage. This arrangement also prevents a remaining gas unused for power generation from being locally accumulated on the surface of at least one of the anode and the cathodes and blocking the reactive gas passage. This accordingly prevents a decrease of the power generation capacity of the fuel cell stack.

In one preferable embodiment of the fuel cell stack according to the above aspect of the invention, the separator further includes a middle plate located between the anode-facing plate and the cathode-facing plate. The middle plate has a reactive gas supply flow channel formed to define a reactive gas supply flow path for supplying the reactive gas in a distributed manner into the multiple reactive gas inlets by sequential lamination of the anode-facing plate, the middle plate, and the cathode-facing plate.

In the fuel cell stack according to the above aspect of the invention, the shape, the opening area, and the layout of the multiple reactive gas inlets may be set arbitrarily. For example, the multiple reactive gas inlets may be arranged at substantially equal intervals in a specific area corresponding to a power generation area of the cell laminates on the plate surface of the at least one of the anode-facing plate and the cathode-facing plate.

This arrangement effectively equalizes the in-plane distribution of the reactive gas over the whole surface of at least one of the anode and the cathode of the cell laminate and ensures the two-dimensionally distributed supply of the reactive gas, thus attaining efficient power generation.

In one preferable structure of the fuel cell stack, the multiple reactive gas inlets have different opening areas in such a manner that a reactive gas inlet receiving a supply of the reactive gas from a more downstream side of a reactive gas supply flow path has a wider opening area.

In an arrangement of multiple reactive gas inlets of a substantially identical opening area at substantially equal intervals over the whole area from the upstream to the downstream of the reactive gas supply flow path, the pressure of the reactive gas supplied to the surface of the at least one of the anode and the cathode of the cell laminate is lower in the more downstream of the reactive gas supply flow path. In this case, the flow rate of the reactive gas supplied through the respective reactive gas inlets per unit time is lower in the more downstream of the reactive gas supply flow path.

In the fuel cell stack of the above preferable structure, the reactive gas inlets are designed to have the wider opening areas in the more downstream of the reactive gas supply flow path. This arrangement effectively equalizes the flow rate of the reactive gas supplied through the respective reactive gas inlets per unit time and thereby enables efficient power generation.

In another preferable structure of the fuel cell stack, the multiple reactive gas inlets have a substantially identical opening area and are arranged at different densities in such a manner that reactive gas inlets receiving a supply of the reactive gas from a more downstream side of a reactive gas supply flow path are formed at a higher density.

This arrangement effectively equalizes the in-plane distribution of the flow rate of the reactive gas supplied over the surface of at least one of the anode and the cathode even in the case of the low reactive gas supply pressure in the downstream of the reactive gas supply flow path and thereby enables efficient power generation.

In one preferable application of the fuel cell stack including the middle plate in each separator, the middle plate has a cooling medium flow channel formed to define a cooling medium flow path for allowing flow of a cooling medium to cool down the fuel cell stack by sequential lamination of the anode-facing plate, the middle plate, and the cathode-facing plate.

This structure desirably decreases the total thickness of the separator and thereby downsizes the fuel cell stack, compared with a structure having a cooling medium flow path formed in a separate member.

In the fuel cell stack, the separator may include multiple middle plates, where the reactive gas supply flow channel and the cooling medium flow channel are separately provided in the multiple middle plates. It is, however, preferable that one single middle plate has both the reactive gas supply flow channel and the cooling medium flow channel.

This structure desirably reduces the total number of parts as the constituents of the separator and downsizes the fuel cell stack, compared with a structure having the reactive gas supply flow channel and the cooling medium flow channel formed in multiple separate members.

In another preferable application of the fuel cell stack including the middle plate in each separator, the at least one of the anode-facing plate and the cathode-facing plate with the multiple reactive gas inlets further has an exhaust gas outlet formed to penetrate the plate in the thickness direction and discharge an exhaust gas, which is a remaining gas unused for power generation in the reactive gas supplied through the multiple reactive gas inlets, in the direction perpendicular to the surface of the cell laminate. The middle plate has an exhaust gas discharge flow channel formed to define an exhaust gas discharge flow path for discharging the exhaust gas out of the fuel cell stack from the exhaust gas outlet by sequential lamination of the anode-facing plate, the middle plate, and the cathode-facing plate.

This arrangement desirably discharges a remaining portion of the reactive gas unconsumed for power generation and an unreacted portion of the reactive gas unused for power generation out of the fuel cell stack.

In the fuel cell stack of the above application, it is preferable that the multiple reactive gas inlets and the exhaust gas outlet are provided in the anode-facing plate and that the exhaust gas is not discharged out of the fuel cell stack from the exhaust gas outlet at least during power generation.

This arrangement enables the fuel gas supplied to the anodes to be substantially fully consumed for power generation without being discharged outside of the fuel cell stack at least during power generation. This ensures the high utilization efficiency of the fuel gas.

In one preferable embodiment of the fuel cell stack according to the above aspect of the invention, the multiple reactive gas inlets are provided in the anode-facing plate, and the reactive gas supplied through the multiple reactive gas inlets is substantially fully used for power generation without being discharged out of the fuel cell stack. In this embodiment, the anode-facing plate has the multiple reactive gas inlets but no exhaust gas outlet.

This arrangement enables the fuel gas supplied to the anodes to be substantially fully consumed for power generation and thereby ensures the high utilization efficiency of the fuel gas.

In the fuel cell stack of any of the above arrangements, the anode-facing plate, the cathode-facing plate, and the middle plate are preferably all flat plate members.

The use of the flat plate members desirably facilitates processing of the anode-facing plate, the cathode-facing plate, and the middle plate.

In one preferable structure of the fuel cell stack according to the above aspect of the invention, each of the cell laminates has a gas diffusion layer of a porous material on at least a cathode-side face of the cell laminate to diffusively flow the reactive gas in a direction along the cathode-side face.

This arrangement enables the reactive gas to be efficiently diffused over the whole surface of at least the cathodes.

According to another aspect, the invention is directed to a polymer electrolyte fuel cell stack having a stack structure of multiple cell laminates stacked via separators, where each cell laminate has an anode and a cathode formed on opposed faces of an electrolyte membrane made of a solid polymer material. The separator includes: an anode-facing plate opposed to the anode of the cell laminate; and a cathode-facing plate opposed to the cathode of the cell laminate. At least one of the anode-facing plate and the cathode-facing plate has multiple water inlets formed to penetrate the plate in a thickness direction and arranged to supply water to a surface of each cell laminate in a direction substantially perpendicular to the surface of the cell laminate. The multiple water inlets are arranged in a two-dimensionally distributed manner on a plate surface of the at least one of the anode-facing plate and the cathode-facing plate.

In the fuel cell stack according to the above aspect of the invention, the water introduced through the multiple water inlets is supplied in a two-dimensionally distributed manner to the surface of each cell laminate or more specifically to the surface of at least one of the anode and the cathode. The water supplied in this manner is penetrated across the anode or the cathode into the electrolyte membrane. This arrangement effectively prevents the electrolyte membrane from being locally dried and thus prevents deterioration of the cell performance of the fuel cell stack.

In one preferable embodiment of the fuel cell stack according to the above aspect of the invention, the separator further includes a middle plate located between the anode-facing plate and the cathode-facing plate. The middle plate has a water supply flow channel formed to define a water supply flow path for supplying the water in a distributed manner into the multiple water inlets by sequential lamination of the anode-facing plate, the middle plate, and the cathode-facing plate.

In one preferable application of the fuel cell stack including the middle plate in each separator, the middle plate has a cooling medium flow channel formed to define a cooling medium flow path for allowing flow of a cooling medium to cool down the polymer electrolyte fuel cell stack by sequential lamination of the anode-facing plate, the middle plate, and the cathode-facing plate.

This structure desirably decreases the total thickness of the separator and thereby downsizes the fuel cell stack, compared with a structure having a cooling medium flow path formed in a separate member.

In the fuel cell stack of the above application, the cooling medium flow channel may work as the water supply flow channel. This arrangement does not require separate formation of the water supply flow channel and the cooling medium flow channel in the separator and thus desirably facilitates processing of the separator.

In another preferable application of the fuel cell stack including the middle plate in each separator, the at least one of the anode-facing plate and the cathode-facing plate with the multiple water inlets further has multiple reactive gas inlets formed to penetrate the plate in the thickness direction and arranged to supply a preset reactive gas to the surface of the cell laminate in the direction substantially perpendicular to the surface of the cell laminate. The middle plate has a reactive gas supply flow channel formed to define a reactive gas supply flow path for supplying the reactive gas in a distributed manner into the multiple reactive gas inlets by sequential lamination of the anode-facing plate, the middle plate, and the cathode-facing plate. The multiple reactive gas inlets are arranged in a two-dimensionally distributed manner on the plate surface of the at least one of the anode-facing plate and the cathode-facing plate.

In the fuel cell stack of this application, the reactive gas is introduced through the multiple reactive gas inlets and is supplied in a two-dimensionally distributed manner to the surface of each cell laminate or more specifically to the surface of at least one of the anode and the cathode. This arrangement enables the substantially homogeneous supply of the reactive gas over the whole surface of the anode or the cathode and thereby prevents deterioration of the cell performance of the fuel cell stack.

In one preferable embodiment of the fuel cell stack of the above application, the multiple water inlets and the multiple reactive gas inlets are provided in the anode-facing plate, and power generation is performed with the fuel gas supply to the surface of the cell laminate not discharged out of the polymer electrolyte fuel cell stack but retained inside. This arrangement effectively improves the consumption efficiency of the fuel gas supplied to the anodes.

In the fuel cell stack according to the above aspect of the invention, the shape, the opening area, and the layout of the multiple water inlets may be set arbitrarily. For example, the multiple water inlets may be arranged at substantially equal intervals on the plate surface of the at least one of the anode-facing plate and the cathode-facing plate.

This arrangement effectively equalizes the in-plane distribution of water over the whole surface of at least one of the anode and the cathode of the cell laminate and ensures the two-dimensionally distributed supply of the water, thus attaining efficient power generation.

In the fuel cell stack of any of the above arrangements, the anode-facing plate, the cathode-facing plate, and the middle plate are preferably all flat plate members. The use of the flat plate members desirably facilitates processing of the anode-facing plate, the cathode-facing plate, and the middle plate.

In the fuel cell stack according to this aspect of the invention, the multiple water inlets may be provided in the anode-facing plate. This arrangement enables the electrolyte membrane to be kept moist in the thickness direction.

The present invention is not restricted to the fuel cell stack described above, but may be actualized by diversity of other applications, for example, a separator adopted in the fuel cell stack and a fuel cell system including the fuel cell stack, as well as a manufacturing method of the fuel cell stack.

### BRIEF DESCRIPTION OF THE DRAWINGS

Fig. 1 schematically illustrates the structure of a fuel cell system 1000 including a fuel cell stack 100 in a first embodiment of the invention;
Fig. 2 is plan views showing constituents of a fuel cell module 40;
Fig. 3 is a sectional view showing an MEA 451 of an MEA unit 45;
Fig. 4 is a plan view showing a separator 41;
Fig. 5 shows the sectional structure of the fuel cell module 40;
Fig. 6 is plan views showing constituents of a fuel cell module 40A in a fuel cell stack of a second embodiment;
Fig. 7 is a plan view showing a separator 41A;
Fig. 8 shows the sectional structure of the fuel cell module 40A;
Fig. 9 schematically illustrates the structure of a fuel cell system 1000B including a fuel cell stack 100B in a third embodiment;
Fig. 10 is plan views showing constituents of a fuel cell module 40B in the fuel cell stack 100B of the third embodiment;
Fig. 11 is a plan view showing a separator 41B;
Fig. 12 shows the sectional structure of the fuel cell module 40B;
Fig. 13 is plan views showing constituents of a fuel cell module 40C in a fuel cell stack of a fourth embodiment;
Fig. 14 is a plan view showing a separator 41C;
Fig. 15 shows the sectional structure of the fuel cell module 40C;
Fig. 16 schematically illustrates the structure of a fuel cell system 1000D in one modified example;
Fig. 17 is plan views showing anode-facing plates 42E, 42F, and 42G as modified examples of an anode-facing plate 42 of the first embodiment;
Fig. 18 shows the sectional structure of a fuel cell module as a modified example of the fuel cell module 40 of the first embodiment;
Fig. 19 schematically illustrates the structure of a fuel cell system 1000E including a fuel cell stack 100E in a fifth embodiment of the invention;
Fig. 20 is a sectional view showing the schematic structure of fuel cell modules 200 in the fuel cell stack 100E of the fifth embodiment;
Fig. 21 is a plan view showing the sectional structure of an MEA unit 110 taken on a line A-A of the fuel cell module 200 in Fig. 20;
Fig. 22 shows the contour of a middle plate 133 in the fifth embodiment;
Fig. 23 shows the contour of an anode-facing plate 131 in the fifth embodiment;
Fig. 24 shows the contour of a cathode-facing plate 132 in the fifth embodiment;
Fig. 25 schematically illustrates the structure of a fuel cell system 1000F including a fuel cell stack 100F in a sixth embodiment of the invention;
Fig. 26 shows the contour of a middle plate 133A in the sixth embodiment;
Fig. 27 shows the contour of an anode-facing plate 131A in the sixth embodiment;
Fig. 28 shows the contour of a cathode-facing plate 132A in the sixth embodiment; and
Fig. 29 schematically illustrates the structure of a fuel cell system 1000G including a fuel cell stack 100G in a seventh embodiment of the invention.

### BEST MODE FOR CARRYING OUT THE INVENTION

### A. First Embodiment

### A1. Structure of Fuel Cell System

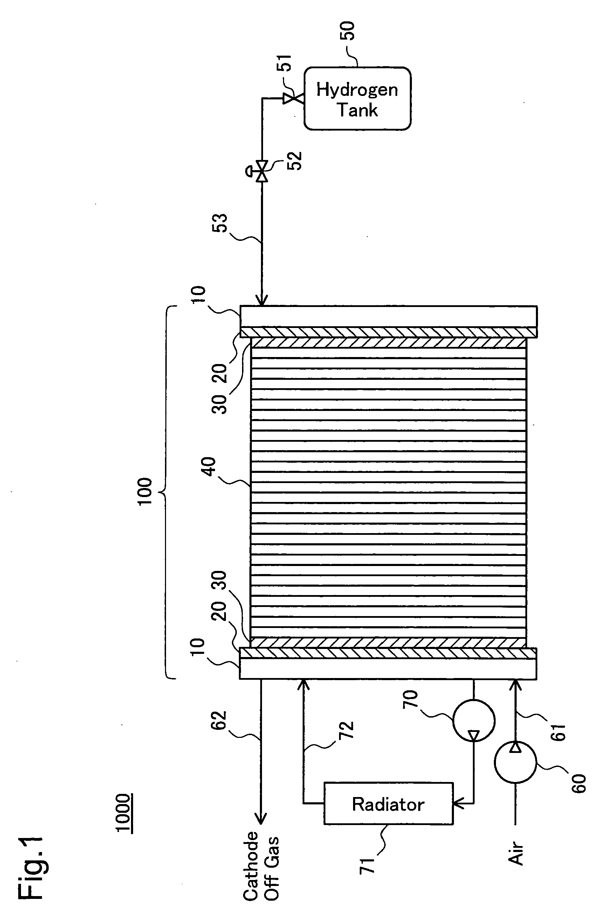

Fig. 1 schematically illustrates the structure of a fuel cell system 1000 including a stack of fuel cells or fuel cell stack 100 in a first embodiment of the invention.

The fuel cell stack 100 has a stack structure of multiple cell laminates stacked via separators. Each cell laminate generates electricity through electrochemical reaction of hydrogen with oxygen and has an anode and a cathode arranged across a proton-conductive electrolyte membrane as explained later. A solid polymer membrane is adopted for the electrolyte membrane in this embodiment. The separator of this embodiment consists of three flat metal plates that are stacked and joined together and respectively have multiple through holes. The three metal plates of the separator form a flow path of hydrogen as a fuel gas to be supplied to the anode, a flow path of the air as an oxidizing gas to be supplied to the cathode, and a flow path of cooling water. The number of cell laminates included in the fuel cell stack 100 is arbitrarily set according to an output demand required for the fuel cell stack 100.

The fuel cell stack 100 is constructed by arranging a pair of power collectors 30, a pair of insulator plates 20, and a pair of end plates 10 sequentially outward across multiple fuel cell modules 40. These elements of the fuel cell stack 100 have inlets and outlets to introduce and discharge the flow of hydrogen, the flow of oxygen, and the flow of cooling water into and from the fuel cell stack 100. Each fuel cell module 40 includes a separator 41 and a membrane electrode assembly (hereafter referred to as MEA) unit 45 including the electrolyte membrane with the anode and the cathode. The detailed structures of the fuel cell module 40 and the MEA unit 45 will be described later.

The end plates 10 are made of a metal, such as steel, to give the stiffness. The insulator plates 20 are made of an insulating material, such as rubber or resin. The power collectors 30 are made of a gas-impermeable electrically conductive material, such as dense carbon or copper. The power collectors 30 have output terminals (not shown) to output the electric power generated in the fuel cell stack 100.

Although not being specifically illustrated, a pressing force is applied to the fuel cell stack 100 in a stacking direction of the stack structure to prevent deterioration of the cell performance due to an increase in contact resistance in any position of the stack structure and to prevent any gas leakage in the stack structure.

A supply of hydrogen is introduced from a hydrogen tank 50 of high-pressure hydrogen via a pipe 53 and is fed as a fuel gas to the anodes in the fuel cell stack 100. Instead of using the hydrogen tank 50, hydrogen to be supplied to the anodes may be produced by a reforming reaction of an alcohol, a hydrocarbon, or an aldehyde as a starting material.

The high-pressure hydrogen stored in the hydrogen tank 50 flows through a shut valve 51 and a regulator 52 provided at an outlet of the hydrogen tank 50 to be subjected to regulation of the pressure and the flow rate, before being supplied to the anodes. The fuel cell system 1000 of this embodiment is designed to fully consume the hydrogen supplied to the anodes of the fuel cell stack 100 for power generation and does not have an exhaust pipe to discharge an exhaust gas from the anodes (hereafter referred to as anode off gas) to the outside of the fuel cell stack 100. This configuration of the fuel cell system 1000 ensures the efficient use of the fuel gas.

A supply of the air compressed by a compressor 60 flows through a pipe 61 and is fed as an oxygen-containing oxidizing gas to the cathodes in the fuel cell stack 100. An exhaust gas from the cathodes (hereafter referred to as cathode off gas) is discharged via a pipe 62 to the outside of the fuel cell stack 100. Water produced on the cathodes through the electrochemical reaction of hydrogen with oxygen in the fuel cell stack 100 is discharged with the cathode off gas through the pipe 62.

A flow of cooling water is also supplied to the fuel cell stack 100 to cool down the fuel cell stack 100. The cooling water is flowed through a pipe 72 by means of a pump 70, is cooled down by a radiator 71, and is supplied to the fuel cell stack 100.

### A2. Structure of Fuel Cell Module

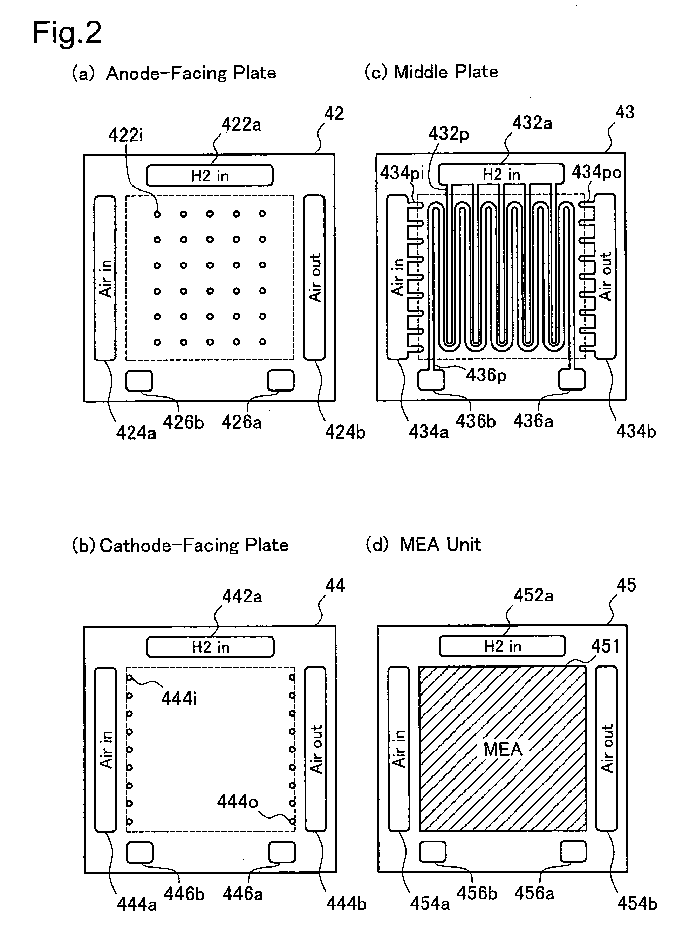

Fig. 2 is plan views showing constituents of the fuel cell module 40. As explained previously, the fuel cell module 40 is constructed by stacking the separator 41 and the MEA unit 45. The separator 41 is obtained by stacking three flat plates respectively having multiple through holes, an anode-facing plate 42, a middle plate 43, and a cathode-facing plate 44, in this sequence and hot pressing the laminate of these three plates. In the structure of this embodiment, the anode-facing plate 42, the middle plate 43, and the cathode-facing plate 44 are stainless steel flat plates of an identical rectangular shape. The material of the anode-facing plate 42, the middle plate 43, and the cathode-facing plate 44 is not restricted to stainless steel but may be another metal like titanium or aluminum. A metal having high corrosion resistance is preferably used as the material of these plates, since these plates are exposed to cooling water

Fig. 2(a) is a plan view showing the anode-facing plate 42 that is in contact with the anode face of the MEA unit 45. As illustrated, the anode-facing plate 42 has a hydrogen supply through hole 422a, multiple hydrogen inlets 422i, an air supply through hole 424a, an air discharge through hole 424b, a cooling water supply through hole 426a, and a cooling water discharge through hole 426b. In the structure of this embodiment, the hydrogen supply through hole 422a, the air supply through hole 424a, the air discharge through hole 424b, the cooling water supply through hole 426a, and the cooling water discharge through hole 426b are substantially rectangular in shape. The shapes, the sizes, and the layout of these through holes may be specified arbitrarily. The multiple hydrogen inlets 422i are circular apertures of an identical diameter. The multiple hydrogen inlets 422i are two-dimensionally distributed and arranged at substantially equal intervals in a specific area opposed to an MEA 451 of the MEA unit 45, in order to equalize the in-plane distribution of the hydrogen supply over the whole surface of the anode in the MEA unit 45.

Fig. 2(b) is a plan view showing the cathode-facing plate 44 that is in contact with the cathode face of the MEA unit 45. As illustrated, the cathode-facing plate 44 has a hydrogen supply through hole 442a, an air supply through hole 444a, multiple air inlets 444i, multiple air outlets 444o, an air discharge through hole 444b, a cooling water supply through hole 446a, and a cooling water discharge through hole 446b. As in the anode-facing plate 42, the hydrogen supply through hole 442a, the air supply through hole 444a, the air discharge through hole 444b, the cooling water supply through hole 446a, and the cooling water discharge through hole 446b are substantially rectangular in shape. The multiple air inlets 444i and the multiple air outlets 444o are circular apertures of an identical diameter. The multiple air inlets 444i are arranged to introduce the air into the periphery of the cathode of the MEA unit 45 close to the air supply through hole 444a. The multiple air outlets 444o are arranged to discharge the cathode off gas from the periphery of the cathode of the MEA unit 45 close to the air discharge through hole 444b.

Fig. 2(c) is a plan view showing the middle plate 43. As illustrated, the middle plate 43 has a hydrogen supply through hole 432a, an air supply through hole 434a, an air discharge through hole 434b, a cooling water supply through hole 436a, and a cooling water discharge through hole 436b. As in the anode-facing plate 42 and the cathode-facing plate 44, the hydrogen supply through hole 432a, the air supply through hole 434a, the air discharge through hole 434b, the cooling water supply through hole 436a, and the cooling water discharge through hole 436b are substantially rectangular in shape. The hydrogen supply through hole 432a has multiple hydrogen supply flow channels 432p to allow the flow of hydrogen in a distributed manner from the hydrogen supply through hole 432a into the multiple hydrogen inlets 422i formed in the anode-facing plate 42. The air supply through hole 434a has multiple air supply flow channels 434pi to allow the flow of the air in a distributed manner from the air supply through hole 434a into the multiple air inlets 444i formed in the cathode-facing plate 44. The air discharge through hole 434b has multiple air discharge flow channels 434po to allow the flow of the cathode off gas in a collective manner from the multiple air outlets 444o formed in the cathode-facing plate 44 to the air discharge through hole 434b. As illustrated, in order to cool down a whole heat-producing or exothermic site of the MEA unit 45, a cooling water flow channel 436p is formed in a serpentine layout to connect the cooling water supply through hole 436a with the cooling water discharge through hole 436b and make the serpentine flow of cooling water between the multiple hydrogen supply flow channels 432p.

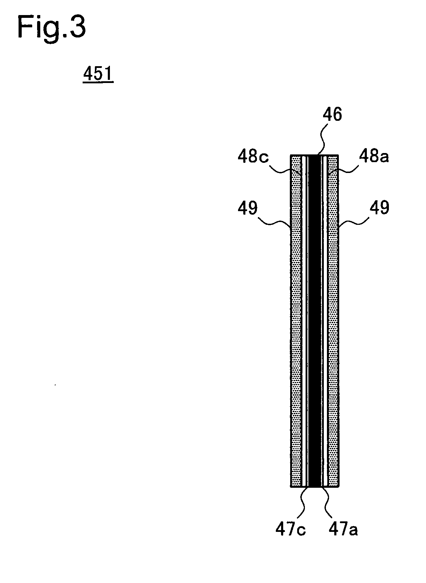

Fig. 2(d) is a plan view showing the cathode face of the MEA unit 45. Fig. 3 is a sectional view showing the MEA 451 of the MEA unit 45.

The MEA 451 arranged in a center area of the MEA unit 45 is a membrane electrode laminate including a cathode catalyst layer 47c and a cathode diffusion layer 48c that are formed in this sequence on one face (cathode face) of the electrolyte membrane 46 and an anode catalyst layer 47a and an anode diffusion layer 48a that are formed in this sequence on the other face (anode face) of the electrolyte membrane 46 as shown in Fig. 3. In this embodiment, porous carbon is used for the anode diffusion layer 48a and the cathode diffusion layer 48c. Porous metal layers 49 are further formed on both faces of the MEA 451 to function as gas flow path layers for the hydrogen flow and the air flow in the laminate of the MEA unit 45 and the separator 41. The cathode diffusion layer 48c, the anode diffusion layer 48a, and the porous metal layers 49 ensure the efficient diffusion of the gas supplies over the whole faces of the anode and the cathode. The material of the gas flow path layers is not restricted to the porous metal but may be any other suitable material having electrical conductivity and gas diffusivity, such as carbon.

The MEA unit 45 has the MEA 451 held by a silicone rubber support frame. The silicone rubber support frame may be replaced with a support frame of another suitable material having gas impermeability, elasticity, and heat resistance. Although not being specifically illustrated, the support frame has an integrally-formed seal structure to prevent leakage of the gases and the cooling water in the laminate of the MEA unit 45 and the separator 41. The support frame may be formed by, for example, injection molding.

As shown in Fig. 2(d), the MEA unit 45 has a hydrogen supply through hole 452a, an air supply through hole 454a, an air discharge through hole 454b, a cooling water supply through hole 456a, and a cooling water discharge through hole 456b formed in the support frame, in addition to the MEA 451. As in the anode-facing plate 42, the cathode-facing plate 44, and the middle plate 43, the hydrogen supply through hole 452a, the air supply through hole 454a, the air discharge through hole 454b, the cooling water supply through hole 456a, and the cooling water discharge through hole 456b are substantially rectangular in shape.

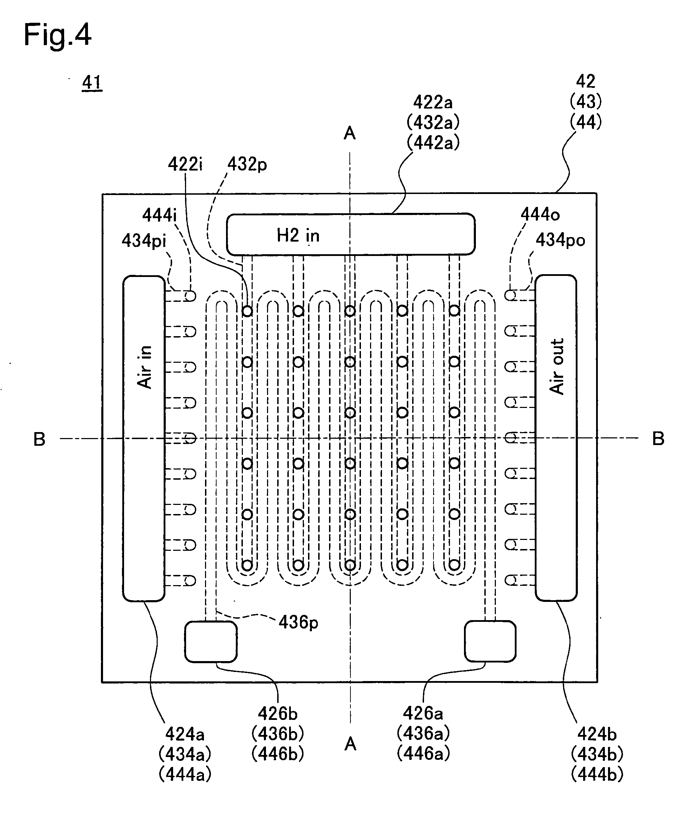

Fig. 4 is a plan view showing the separator 41. As explained above, the separator 41 is designed to have the stack structure of the anode-facing plate 42, the middle plate 43, and the cathode-facing plate 44. Fig. 4 shows the anode-facing plate 42 of the separator 41.

As clearly understood from the illustration, the hydrogen supply through hole 422a, the hydrogen supply through hole 432a, and the hydrogen supply through hole 442a have an identical shape and are respectively formed at corresponding equivalent positions in the anode-facing plate 42, the middle plate 43, and the cathode-facing plate 44. Similarly the air supply through hole 424a, the air supply through hole 434a, and the air supply through hole 444a have an identical shape and are respectively formed at corresponding equivalent positions in the anode-facing plate 42, the middle plate 43, and the cathode-facing plate 44. The air discharge through hole 424b, the air discharge through hole 434b, and the air discharge through hole 444b have an identical shape and are respectively formed at corresponding equivalent positions in the anode-facing plate 42, the middle plate 43, and the cathode-facing plate 44. The cooling water supply through hole 426a, the cooling water supply through hole 436a, and the cooling water supply through hole 446a have an identical shape and are respectively formed at corresponding equivalent positions in the anode-facing plate 42, the middle plate 43, and the cathode-facing plate 44. The cooling water discharge through hole 426b, the cooling water discharge through hole 436b, and the cooling water discharge through hole 446b have an identical shape and are respectively formed at corresponding equivalent positions in the anode-facing plate 42, the middle plate 43, and the cathode-facing plate 44.

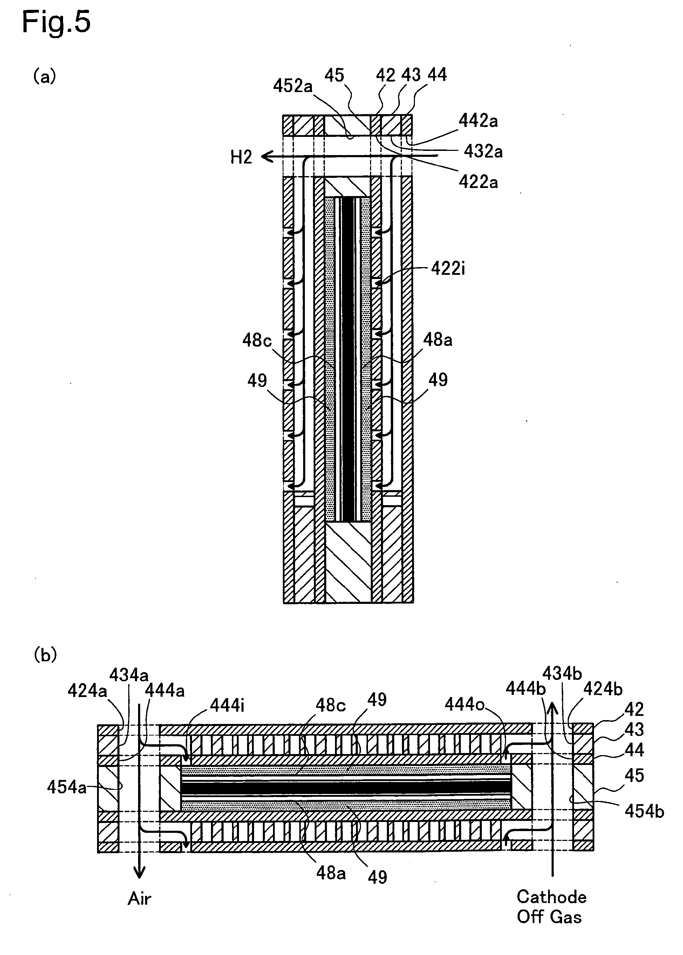

Fig. 5 shows the sectional structure of the fuel cell module 40. Fig. 5(a) is a sectional view taken on a line A-A in Fig. 4, and Fig. 5(b) is a sectional view taken on a line B-B in Fig. 4.

The porous metal layer 49 formed on the anode diffusion layer 48a of the MEA 451 in the MEA unit 45 is arranged to be in contact with the anode-facing plate 42 of the separator 41 in the laminate of the MEA unit 45 and the separator 41. The porous metal layer 49 formed on the cathode diffusion layer 48c of the MEA 451 in the MEA unit 45 is arranged to be in contact with the cathode-facing plate 44 of the separator 41 in the laminate of the MEA unit 45 and the separator 41

As shown by the arrows in Fig. 5(a), in the fuel cell module 40, the flow of hydrogen passing through the hydrogen supply through hole 442a in the cathode-facing plate 44, the hydrogen supply through hole 432a in the middle plate 43, and the hydrogen supply through hole 422a in the anode-facing plate 42 is branched off from the hydrogen supply through hole 432a in the middle plate 43 to enter the multiple hydrogen supply flow channels 432p, goes through the multiple hydrogen inlets 422i in the anode-facing plate 42 and the anode-side porous metal layer 49, and is diffusively supplied over the whole face of the anode diffusion layer 48a.

As shown by the arrows in Fig. 5(b), in the fuel cell module 40, the flow of the air passing through the air supply through hole 424a in the anode-facing plate 42, the air supply through hole 434a in the middle plate 43, and the air supply through hole 444a in the cathode-facing plate 44 is branched off from the air supply through hole 434a in the middle plate 43 to enter the multiple air supply flow channels 434pi, goes through the multiple air inlets 444i in the cathode-facing plate 44, and is supplied in a direction perpendicular to the surface of the cathode-side porous metal layer 49. The air is then diffusively flowed through the porous metal layer 49 and the cathode diffusion layer 48c. The cathode off gas is flowed out of the multiple air outlets 444o in the cathode-facing plate 44 in a direction perpendicular to the surface of the porous metal layer 49, goes through the multiple air discharge flow channels 434po and the air discharge through hole 434b in the middle plate 43, and is discharged from the air discharge through hole 424b in the anode-facing plate 42.

Although not being specifically illustrated, the flow of cooling water passing through the cooling water supply through hole 426a in the anode-facing plate 42, the cooling water supply through hole 436a in the middle plate 43, and the cooling water supply through hole 446a in the cathode-facing plate 44 is branched off from the cooling water supply through hole 436a in the middle plate 43, goes through the cooling water flow channel 436p, and is discharged from the cooling water discharge through hole 436b in the middle plate 43.

In the fuel cell stack 100 of the first embodiment described above, the hydrogen flow goes through the multiple hydrogen inlets 422i arranged at substantially equal intervals in the anode-facing plate 42 and is supplied in a direction perpendicular to the anode surface of the MEA 451 to be two-dimensionally distributed over the substantially whole face of the anode for power generation. This arrangement effectively prevents water produced in the course of the electrochemical reaction and transmitted through the electrolyte membrane 46 from the cathode side to the anode side from being locally accumulated on the surface of the anode and blocking the hydrogen passage. This arrangement also prevents nitrogen and other unreacted gas components unused for power generation from being transmitted from the cathode side to the anode side, being locally accumulated on the surface of the anode, and blocking the hydrogen passage. The structure of the first embodiment thus desirably prevents deterioration of the power generation performance of the fuel cell stack 100.

As mentioned previously, the fuel cell system 1000 of the first embodiment is designed to fully consume the hydrogen supplied to the anodes of the fuel cell stack 100 for power generation and does not have the exhaust pipe to discharge the anode off gas to the outside of the fuel cell stack 100. In the conventional fuel cell system of this design, nitrogen and other unreacted gas components unused for power generation tend to locally accumulate on the surface of the anodes and cause significant deterioration of the power generation performance of the fuel cell stack. In the fuel cell system 1000 of the first embodiment, however, the structure of the fuel cell stack 100 effectively prevents nitrogen and other unreacted gas components unused for power generation from being locally accumulated on the surface of the anodes and thereby desirably prevents deterioration of the power generation performance of the fuel cell stack 100.

In the structure of this embodiment, the cooling water flow channel 436p is formed in the middle plate 43. This structure desirably decreases the total thickness of the separator and thereby downsizes the fuel cell stack, compared with the structure having a cooling water flow channel formed in a separate member.

The hydrogen supply flow channels 432p, the air supply flow channels 434pi, the air discharge flow channels 434po, and the cooling water flow channel 436p are formed in one single middle plate 43. This structure desirably reduces the total number of parts as the constituents of the separator, compared with the structure having the gas flow channels and the cooling water flow channel formed in multiple separate members.

### B. Second Embodiment

A fuel cell system of a second embodiment has a similar structure to that of the fuel cell system 1000 of the first embodiment, except a fuel cell stack that is different from the fuel cell stack 100 of the first embodiment. The following description thus regards the structure of the fuel cell stack in the second embodiment.

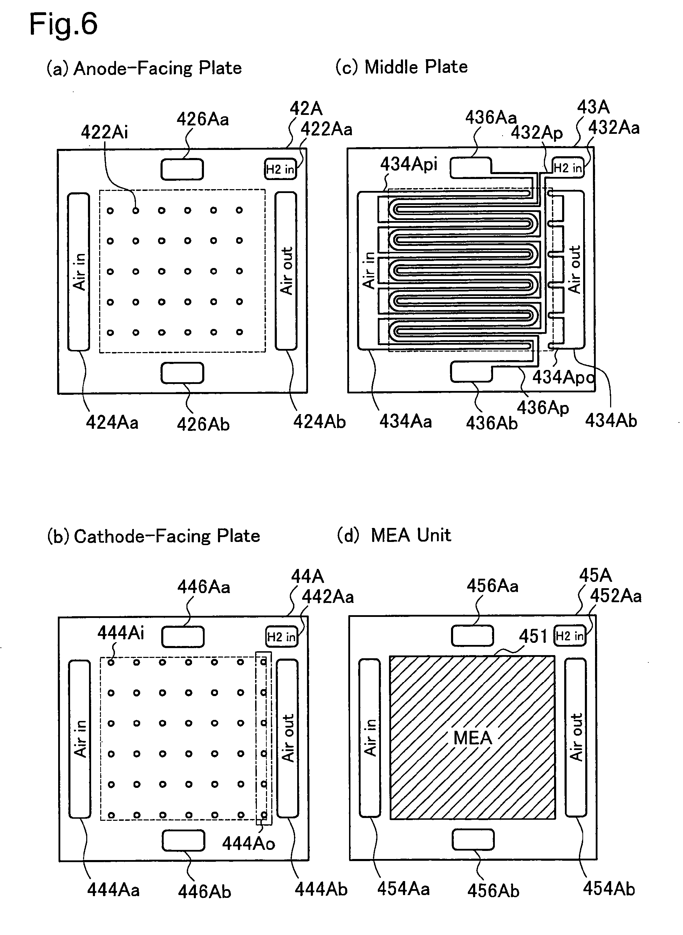

Fig. 6 is plan views showing constituents of a fuel cell module 40A in the fuel cell stack of the second embodiment. Like the fuel cell module 40 of the first embodiment, the fuel cell module 40A of the second embodiment is constructed by stacking a separator 41A and an MEA unit 45A. The separator 41A is obtained by stacking an anode-facing plate 42A, a middle plate 43A, and a cathode-facing plate 44A in this sequence and hot pressing the laminate of these three plates. In the structure of this embodiment, the anode-facing plate 42A, the middle plate 43A, and the cathode-facing plate 44A are stainless steel plates of an identical rectangular shape.

The structural difference of the second embodiment from the first embodiment includes a two-dimensionally distributed arrangement of multiple air inlets in the cathode-facing plate 44A, in addition to a two-dimensionally distributed arrangement of multiple hydrogen inlets in the anode-facing plate 42A.

Fig. 6(a) is a plan view showing the anode-facing plate 42A that is in contact with the anode face of the MEA unit 45A. As illustrated, the anode-facing plate 42A has a hydrogen supply through hole 422Aa, multiple hydrogen inlets 422Ai, an air supply through hole 424Aa, an air discharge through hole 424Ab, a cooling water supply through hole 426Aa, and a cooling water discharge through hole 426Ab. In the structure of this embodiment, the hydrogen supply through hole 422Aa, the air supply through hole 424Aa, the air discharge through hole 424Ab, the cooling water supply through hole 426Aa, and the cooling water discharge through hole 426Ab are substantially rectangular in shape. The multiple hydrogen inlets 422Ai are circular apertures of an identical diameter. As in the structure of the first embodiment, the multiple hydrogen inlets 422Ai are two-dimensionally distributed and arranged at substantially equal intervals in a specific area opposed to an MEA 451 of the MEA unit 45A, in order to equalize the in-plane distribution of the hydrogen supply over the whole surface of the anode in the MEA unit 45A.

Fig. 6(b) is a plan view showing the cathode-facing plate 44A that is in contact with the cathode face of the MEA unit 45A. As illustrated, the cathode-facing plate 44A has a hydrogen supply through hole 442Aa, an air supply through hole 444Aa, multiple air inlets 444Ai, multiple air outlets 444Ao, an air discharge through hole 444Ab, a cooling water supply through hole 446Aa, and a cooling water discharge through hole 446Ab. As in the anode-facing plate 42A, the hydrogen supply through hole 442Aa, the air supply through hole 444Aa, the air discharge through hole 444Ab, the cooling water supply through hole 446Aa, and the cooling water discharge through hole 446Ab are substantially rectangular in shape. The multiple air inlets 444Ai and the multiple air outlets 444Ao are circular apertures of an identical diameter. Unlike the structure of the first embodiment, the multiple air inlets 444Ai are two-dimensionally distributed and arranged at substantially equal intervals in a specific area opposed to the MEA 451 of the MEA unit 45A, in order to equalize the in-plane distribution of the air supply over the whole surface of the cathode in the MEA unit 45A. The multiple air outlets 444Ao are arranged to discharge the cathode off gas from the periphery of the cathode in the MEA unit 45A close to the air discharge through hole 444Ab.

Fig. 6(c) is a plan view showing the middle plate 43A. As illustrated, the middle plate 43A has a hydrogen supply through hole 432Aa, an air supply through hole 434Aa, an air discharge through hole 434Ab, a cooling water supply through hole 436Aa, and a cooling water discharge through hole 436Ab. As in the anode-facing plate 42A and the cathode-facing plate 44A, the hydrogen supply through hole 432Aa, the air supply through hole 434Aa, the air discharge through hole 434Ab, the cooling water supply through hole 436Aa, and the cooling water discharge through hole 436Ab are substantially rectangular in shape. The hydrogen supply through hole 432Aa has multiple hydrogen supply flow channels 432Ap to allow the flow of hydrogen in a distributed manner from the hydrogen supply through hole 432Aa into the multiple hydrogen inlets 422Ai formed in the anode-facing plate 42A. The air supply through hole 434Aa has multiple air supply flow channels 434Api to allow the flow of the air in a distributed manner from the air supply through hole 434Aa into the multiple air inlets 444Ai formed in the cathode-facing plate 44A. The air discharge through hole 434Ab has multiple air discharge flow channels 434Apo to allow the flow of the cathode off gas in a collective manner from the multiple air outlets 444Ao formed in the cathode-facing plate 44A to the air discharge through hole 434Ab. As illustrated, in order to cool down a whole heat-producing or exothermic site of the MEA unit 45A, a cooling water flow channel 436Ap is formed in a serpentine layout to connect the cooling water supply through hole 436Aa with the cooling water discharge through hole 436Ab and make the serpentine flow of cooling water between the multiple hydrogen supply flow channels 432Ap and the multiple air supply flow channels 434Api.

Fig. 6(d) is a plan view showing the cathode face of the MEA unit 45A. As illustrated, the MEA unit 45A has a hydrogen supply through hole 452Aa, an air supply through hole 454Aa, an air discharge through hole 454Ab, a cooling water supply through hole 456Aa, and a cooling water discharge through hole 456Ab formed in a support frame, in addition to the MEA 451. As in the anode-facing plate 42A, the cathode-facing plate 44A, and the middle plate 43A, the hydrogen supply through hole 452Aa, the air supply through hole 454Aa, the air discharge through hole 454Ab, the cooling water supply through hole 456Aa, and the cooling water discharge through hole 456Ab are substantially rectangular in shape. The other structural elements of the MEA unit 45A of the second embodiment are identical with those of the MEA unit 45 of the first embodiment.

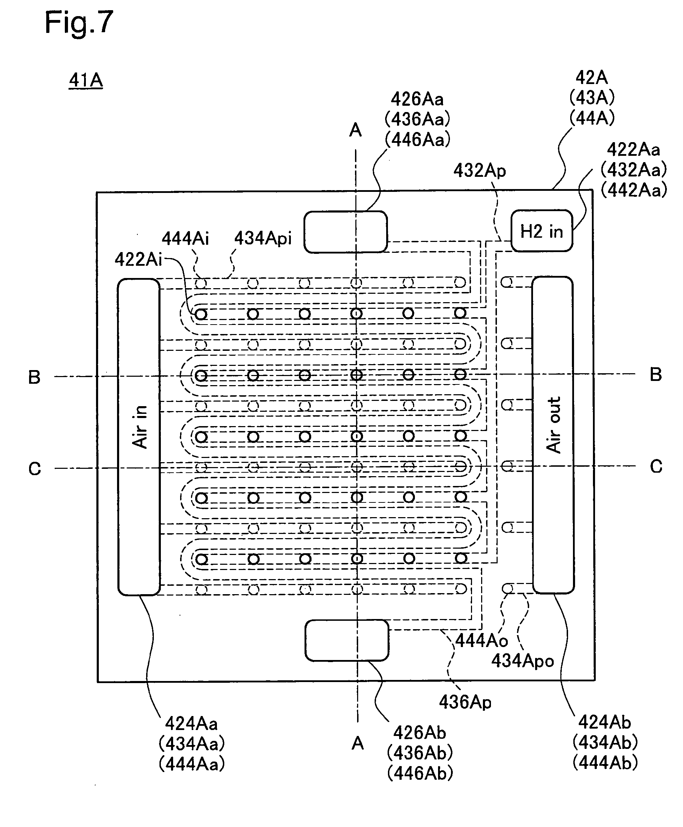

Fig. 7 is a plan view showing the separator 41A. Like the separator 41 of the first embodiment, the separator 41A is designed to have the stack structure of the anode-facing plate 42A, the middle plate 43A, and the cathode-facing plate 44A. Fig. 7 shows the anode-facing plate 42A of the separator 41A.

As clearly understood from the illustration, the hydrogen supply through hole 422Aa, the hydrogen supply through hole 432Aa, and the hydrogen supply through hole 442Aa have an identical shape and are respectively formed at corresponding equivalent positions in the anode-facing plate 42A, the middle plate 43A, and the cathode-facing plate 44A. Similarly the air supply through hole 424Aa, the air supply through hole 434Aa, and the air supply through hole 444Aa have an identical shape and are respectively formed at corresponding equivalent positions in the anode-facing plate 42A, the middle plate 43A, and the cathode-facing plate 44A. The air discharge through hole 424Ab, the air discharge through hole 434Ab, and the air discharge through hole 444Ab have an identical shape and are respectively formed at corresponding equivalent positions in the anode-facing plate 42A, the middle plate 43A, and the cathode-facing plate 44A. The cooling water supply through hole 426Aa, the cooling water supply through hole 436Aa, and the cooling water supply through hole 446Aa have an identical shape and are respectively formed at corresponding equivalent positions in the anode-facing plate 42A, the middle plate 43A, and the cathode-facing plate 44A. The cooling water discharge through hole 426Ab, the cooling water discharge through hole 436Ab, and the cooling water discharge through hole 446Ab have an identical shape and are respectively formed at corresponding equivalent positions in the anode-facing plate 42A, the middle plate 43A, and the cathode-facing plate 44A.

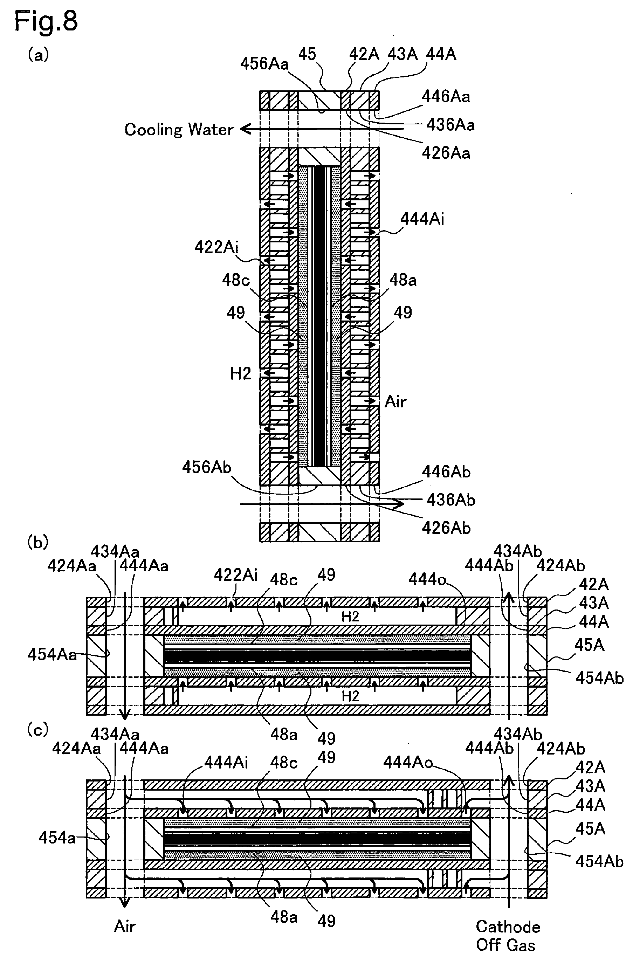

Fig. 8 shows the sectional structure of the fuel cell module 40A. Fig. 8(a) is a sectional view taken on a line A-A in Fig. 7, Fig. 8(b) is a sectional view taken on a line B-B in Fig. 7, and Fig. 8(c) is a sectional view taken on a line C-C in Fig. 7.

As clearly understood from Figs. 7 and 8, in the fuel cell module 40A, the flow of hydrogen passing through the hydrogen supply through hole 442Aa in the cathode-facing plate 44A, the hydrogen supply through hole 432Aa in the middle plate 43A, and the hydrogen supply through hole 422Aa in the anode-facing plate 42A is branched off from the hydrogen supply through hole 432Aa in the middle plate 43A to enter the multiple hydrogen supply flow channels 432Ap, goes through the multiple hydrogen inlets 422Ai in the anode-facing plate 42A and an anode-side porous metal layer 49, and is diffusively supplied over the whole face of an anode diffusion layer 48a.

In the fuel cell module 40A, the flow of the air passing through the air supply through hole 424Aa in the anode-facing plate 42A, the air supply through hole 434Aa in the middle plate 43A, and the air supply through hole 444Aa in the cathode-facing plate 44A is branched off from the air supply through hole 434Aa in the middle plate 43A to enter the multiple air supply flow channels 434Api, goes through the multiple air inlets 444Ai in the cathode-facing plate 44A and a cathode-side porous metal layer 49, and is diffusively supplied over the whole surface of a cathode diffusion layer 48c. The air is then diffusively flowed through the cathode diffusion layer 48c. The cathode off gas is flowed out of the multiple air outlets 444Ao in the cathode-facing plate 44A in a direction perpendicular to the surface of the porous metal layer 49, goes through the multiple air discharge flow channels 434Apo and the air discharge through hole 434Ab in the middle plate 43A, and is discharged from the air discharge through hole 424Ab in the anode-facing plate 42A.

The flow of cooling water passing through the cooling water supply through hole 426Aa in the anode-facing plate 42A, the cooling water supply through hole 436Aa in the middle plate 43A, and the cooling water supply through hole 446Aa in the cathode-facing plate 44A is branched off from the cooling water supply through hole 436Aa in the middle plate 43A, goes through the cooling water flow channel 436Ap, and is discharged from the cooling water discharge through hole 436Ab in the middle plate 43A.

In the fuel cell stack of the second embodiment described above, the hydrogen flow goes through the multiple hydrogen inlets 422Ai arranged at substantially equal intervals in the anode-facing plate 42A and is supplied in a direction perpendicular to the anode surface of the MEA 451 to be two-dimensionally distributed over the substantially whole face of the anode for power generation. The air flow goes through the multiple air inlets 444Ai arranged at substantially equal intervals in the cathode-facing plate 44A and is supplied in a direction perpendicular to the cathode surface of the MEA 451 to be two-dimensionally distributed over the substantially whole face of the cathode for power generation. In the anodes of the fuel cell stack, this arrangement effectively prevents water produced in the course of the electrochemical reaction and transmitted through the electrolyte membrane 46 from the cathode side to the anode side and nitrogen and other unreacted gas components unused for power generation from being locally accumulated on the surface of the anode and blocking the hydrogen passage. In the cathodes of the fuel cell stack, this arrangement prevents water produced on the cathode in the course of the electrochemical reaction from being locally accumulated on the surface of the cathode and blocking the air passage. The structure of the second embodiment thus desirably prevents deterioration of the power generation performance of the fuel cell stack.

### C. Third Embodiment

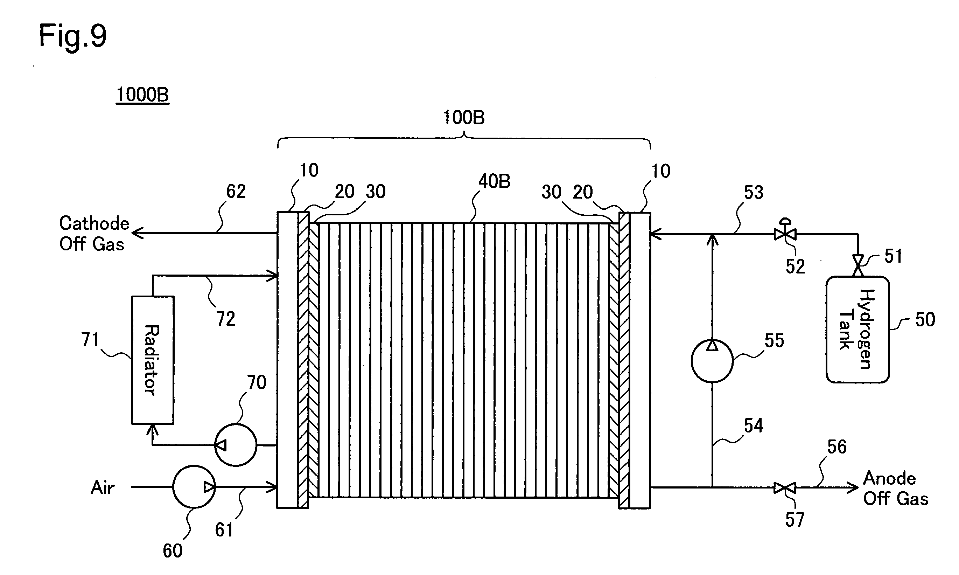

Fig. 9 schematically illustrates the structure of a fuel cell system 1000B including a fuel cell stack 100B in a third embodiment. Unlike the fuel cell system 1000 of the first embodiment, the fuel cell system 1000B of the third embodiment includes an exhaust pipe 56 to discharge the anode off gas out of the fuel cell stack 100B and a circulation pipe 54 to recirculate the anode off gas to a pipe 53 for hydrogen supply. The exhaust pipe 56 is equipped with an exhaust valve 57, and the circulation pipe 54 is equipped with a pump 55. The fuel cell stack 100B also has a structure of discharging the anode off gas as explained later. Controlling the operations of the pump 55 and the exhaust valve 57 switches over the flow of the anode off gas between discharge out of the fuel cell stack 100B and recirculation to the pipe 53. The other structural elements of the fuel cell system 1000B of the third embodiment are identical with those of the fuel cell system 1000 of the first embodiment.

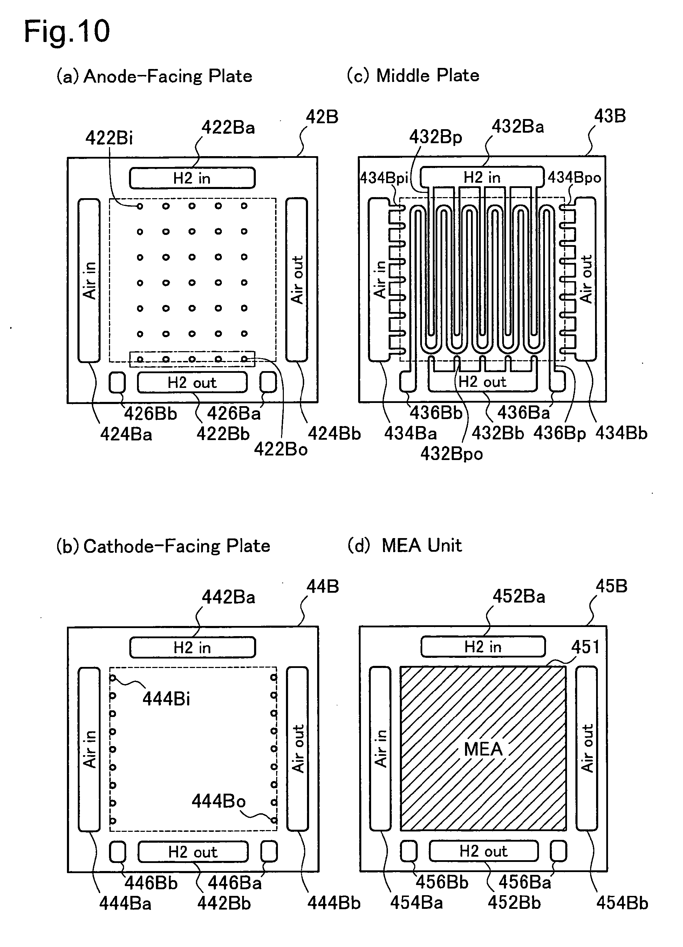

Fig. 10 is plan views showing constituents of a fuel cell module 40B in the fuel cell stack 100B of the third embodiment. Like the fuel cell module 40 of the first embodiment, the fuel cell module 40B of the third embodiment is constructed by stacking a separator 41B and an MEA unit 45B. The separator 41B is obtained by stacking an anode-facing plate 42B, a middle plate 43B, and a cathode-facing plate 44B in this sequence and hot pressing the laminate of these three plates. In the structure of this embodiment, the anode-facing plate 42B, the middle plate 43B, and the cathode-facing plate 44B are stainless steel plates of an identical rectangular shape.

The structural difference of the third embodiment from the first embodiment includes formation of hydrogen discharge through holes in the separator 41B and the MEA unit 45B and formation of multiple hydrogen outlets in the anode-facing plate 42B.

Fig. 10(a) is a plan view showing the anode-facing plate 42B that is in contact with the anode face of the MEA unit 45B. As illustrated, the anode-facing plate 42B has a hydrogen supply through hole 422Ba, multiple hydrogen inlets 422Bi, multiple hydrogen outlets 422Bo, a hydrogen discharge through hole 422Bb, an air supply through hole 424Ba, an air discharge through hole 424Bb, a cooling water supply through hole 426Ba, and a cooling water discharge through hole 426Bb. The hydrogen supply through hole 422Ba, the hydrogen discharge through hole 422 Bb, the air supply through hole 424Ba, the air discharge through hole 424Bb, the cooling water supply through hole 426Ba, and the cooling water discharge through hole 426Bb are substantially rectangular in shape. The multiple hydrogen inlets 422Bi and the multiple hydrogen outlets 422Bo are circular apertures of an identical diameter. Like the structure of the first embodiment, the multiple hydrogen inlets 422Bi are two-dimensionally distributed and arranged at substantially equal intervals in a specific area opposed to an MEA 451 of the MEA unit 45B, in order to equalize the in-plane distribution of the hydrogen supply over the whole surface of the anode in the MEA unit 45B. Unlike the structure of the first embodiment, the multiple hydrogen outlets 422Bo are arranged to discharge the anode off gas from the periphery of the anode of the MEA unit 45B close to the hydrogen discharge through hole 422Bb.

Fig. 10(b) is a plan view showing the cathode-facing plate 44B that is in contact with the cathode face of the MEA unit 45B. As illustrated, the cathode-facing plate 44B has a hydrogen supply through hole 442Ba, a hydrogen discharge through hole 442Bb, an air supply through hole 444Ba, multiple air inlets 444Bi, multiple air outlets 444Bo, an air discharge through hole 444Bb, a cooling water supply through hole 446Ba, and a cooling water discharge through hole 446Bb. As in the anode-facing plate 42B, the hydrogen supply through hole 442Ba, the hydrogen discharge through hole 442Bb, the air supply through hole 444Ba, the air discharge through hole 444Bb, the cooling water supply through hole 446Ba, and the cooling water discharge through hole 446Bb are substantially rectangular in shape. The multiple air inlets 444Bi and the multiple air outlets 444Bo are circular apertures of an identical diameter. The multiple air inlets 444Bi are arranged to introduce the air into the periphery of the cathode of the MEA unit 45B close to the air supply through hole 444Ba. The multiple air outlets 444Bo are arranged to discharge the cathode off gas from the periphery of the cathode of the MEA unit 45B close to the air discharge through hole 444Bb.

Fig. 10(c) is a plan view showing the middle plate 43B. As illustrated, the middle plate 43B has a hydrogen supply through hole 432Ba, a hydrogen discharge through hole 432Bb, an air supply through hole 434Ba, an air discharge through hole 434Bb, a cooling water supply through hole 436Ba, and a cooling water discharge through hole 436Bb. As in the anode-facing plate 42B and the cathode-facing plate 44B, the hydrogen supply through hole 432Ba, the hydrogen discharge through hole 432Bb, the air supply through hole 434Ba, the air discharge through hole 434Bb, the cooling water supply through hole 436Ba, and the cooling water discharge through hole 436Bb are substantially rectangular in shape. The hydrogen supply through hole 432Ba has multiple hydrogen supply flow channels 432Bp to allow the flow of hydrogen in a distributed manner from the hydrogen supply through hole 432Ba into the multiple hydrogen inlets 422Bi formed in the anode-facing plate 42B. The hydrogen discharge through hole 432Bb has multiple hydrogen discharge flow channels 432Bpo to allow the flow of the anode off gas in a collective manner from the multiple hydrogen outlets 422Bo formed in the anode-facing plate 42B to the hydrogen discharge through hole 432Bb. The air supply through hole 434Ba has multiple air supply flow channels 434Bpi to allow the flow of the air in a distributed manner from the air supply through hole 434Ba into the multiple air inlets 444Bi formed in the cathode-facing plate 44B. The air discharge through hole 434Bb has multiple air discharge flow channels 434Bpo to allow the flow of the cathode off gas in a collective manner from the multiple air outlets 444Bo formed in the cathode-facing plate 44B to the air discharge through hole 434Bb. As illustrated, in order to cool down a whole heat-producing or exothermic site of the MEA unit 45B, a cooling water flow channel 436Bp is formed in a serpentine layout to connect the cooling water supply through hole 436Ba with the cooling water discharge through hole 436Bb and make the serpentine flow of cooling water between the multiple hydrogen supply flow channels 432Bp.

Fig. 10(d) is a plan view showing the cathode face of the MEA unit 45B. As illustrated, the MEA unit 45B has a hydrogen supply through hole 452Ba, a hydrogen discharge through hole 452Bb, an air supply through hole 454Ba, an air discharge through hole 454Bb, a cooling water supply through hole 456Ba, and a cooling water discharge through hole 456Bb formed in a support frame, in addition to the MEA 451. As in the anode-facing plate 42B, the cathode-facing plate 44B, and the middle plate 43B, the hydrogen supply through hole 452Ba, the hydrogen discharge through hole 452Bb, the air supply through hole 454Ba, the air discharge through hole 454Bb, the cooling water supply through hole 456Ba, and the cooling water discharge through hole 456Bb are substantially rectangular in shape. The other structural elements of the MEA unit 45B of the third embodiment are identical with those of the MEA unit 45 of the first embodiment.

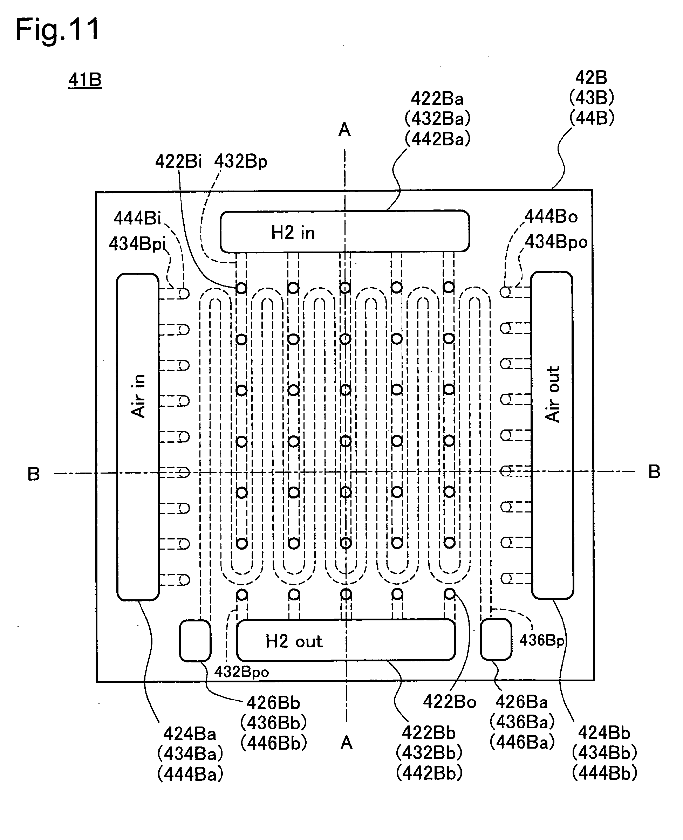

Fig. 11 is a plan view showing the separator 41B. Like the separator 41 of the first embodiment, the separator 41B is designed to have the stack structure of the anode-facing plate 42B, the middle plate 43B, and the cathode-facing plate 44B. Fig. 11 shows the anode-facing plate 42B of the separator 41B.

As clearly understood from the illustration, the hydrogen supply through hole 422Ba, the hydrogen supply through hole 432Ba, and the hydrogen supply through hole 442Ba have an identical shape and are respectively formed at corresponding equivalent positions in the anode-facing plate 42B, the middle plate 43B, and the cathode-facing plate 44B. Similarly the hydrogen discharge through hole 422Bb, the hydrogen discharge through hole 432Bb, and the hydrogen discharge through hole 442Bb have an identical shape and are respectively formed at corresponding equivalent positions in the anode-facing plate 42B, the middle plate 43B, and the cathode-facing plate 44B. The air supply through hole 424Ba, the air supply through hole 434Ba, and the air supply through hole 444Ba have an identical shape and are respectively formed at corresponding equivalent positions in the anode-facing plate 42B, the middle plate 43B, and the cathode-facing plate 44B. The air discharge through hole 424Bb, the air discharge through hole 434Bb, and the air discharge through hole 444Bb have an identical shape and are respectively formed at corresponding equivalent positions in the anode-facing plate 42B, the middle plate 43B, and the cathode-facing plate 44B. The cooling water supply through hole 426Ba, the cooling water supply through hole 436Ba, and the cooling water supply through hole 446Ba have an identical shape and are respectively formed at corresponding equivalent positions in the anode-facing plate 42B, the middle plate 43B, and the cathode-facing plate 44B. The cooling water discharge through hole 426Bb, the cooling water discharge through hole 436Bb, and the cooling water discharge through hole 446Bb have an identical shape and are respectively formed at corresponding equivalent positions in the anode-facing plate 42B, the middle plate 43B, and the cathode-facing plate 44B.

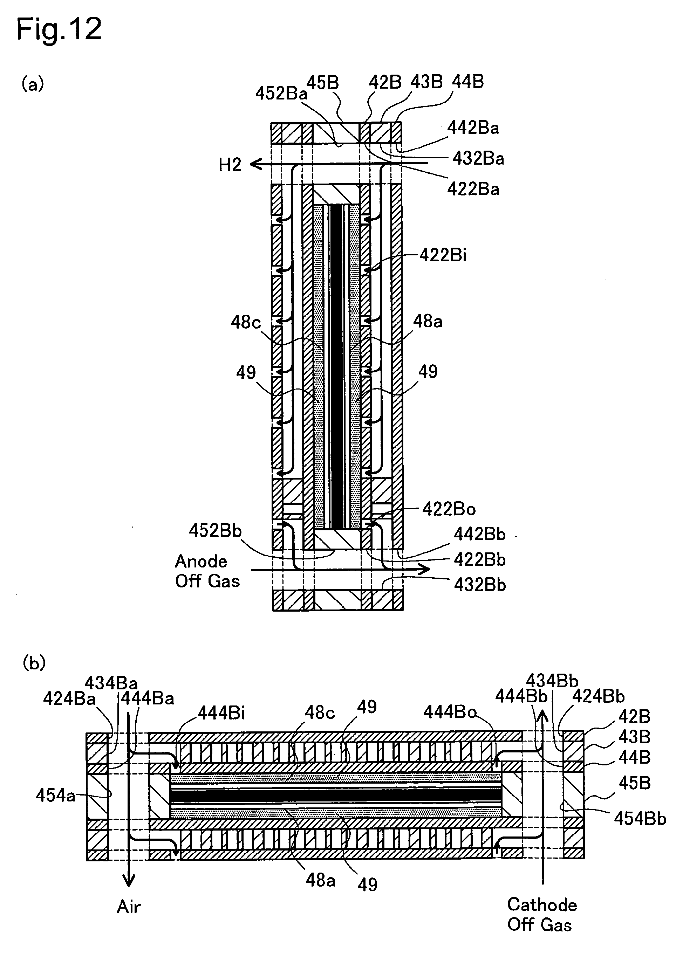

Fig. 12 shows the sectional structure of the fuel cell module 40B. Fig. 12(a) is a sectional view taken on a line A-A in Fig. 11, and Fig. 12(b) is a sectional view taken on a line B-B in Fig. 11.

As shown by the arrows in Fig. 12(a), in the fuel cell module 40B, the flow of hydrogen passing through the hydrogen supply through hole 442Ba in the cathode-facing plate 44B, the hydrogen supply through hole 432Ba in the middle plate 43B, and the hydrogen supply through hole 422Ba in the anode-facing plate 42B is branched off from the hydrogen supply through hole 432Ba in the middle plate 43B to enter the multiple hydrogen supply flow channels 432Bp, goes through the multiple hydrogen inlets 422Bi in the anode-facing plate 42B and an anode-side porous metal layer 49, and is diffusively supplied over the whole face of an anode diffusion layer 48a. The anode off gas is flowed out of the multiple hydrogen outlets 422Bo in the anode-facing plate 42B in a direction perpendicular to the surface of the porous metal layer 49, goes through the multiple hydrogen discharge flow channels 432Bpo and the hydrogen discharge through hole 432Bb in the middle plate 43B, and is discharged from the hydrogen discharge through hole 442Bb in the cathode-facing plate 44B.

As shown by the arrows in Fig. 12(b), in the fuel cell module 40B, the flow of the air passing through the air supply through hole 424Ba in the anode-facing plate 42B, the air supply through hole 434Ba in the middle plate 43B, and the air supply through hole 444Ba in the cathode-facing plate 44B is branched off from the air supply through hole 434Ba in the middle plate 43B to enter the multiple air supply flow channels 434Bpi, goes through the multiple air inlets 444Bi in the cathode-facing plate 44B, and is supplied in a direction perpendicular to the surface of a cathode-side porous metal layer 49. The air is then diffusively flowed through the porous metal layer 49 and a cathode diffusion layer 48c. The cathode off gas is flowed out of the multiple air outlets 444Bo in the cathode-facing plate 44B in a direction perpendicular to the surface of the porous metal layer 49, goes through the multiple air discharge flow channels 434Bpo and the air discharge through hole 434Bb in the middle plate 43B, and is discharged from the air discharge through hole 424Bb in the anode-facing plate 42B.

The flow of cooling water passing through the cooling water supply through hole 426Ba in the anode-facing plate 42B, the cooling water supply through hole 436Ba in the middle plate 43B, and the cooling water supply through hole 446Ba in the cathode-facing plate 44B is branched off from the cooling water supply through hole 436Ba in the middle plate 43B, goes through the cooling water flow channel 436Bp, and is discharged from the cooling water discharge through hole 436Bb in the middle plate 43B.

In the fuel cell stack 100B of the third embodiment described above, as in the fuel cell stack 100 of the first embodiment, the hydrogen flow goes through the multiple hydrogen inlets 422Bi arranged at substantially equal intervals in the anode-facing plate 42B and is supplied in a direction perpendicular to the anode surface of the MEA 451 to be two-dimensionally distributed over the substantially whole face of the anode for power generation. This arrangement effectively prevents water produced in the course of the electrochemical reaction and transmitted through the electrolyte membrane 46 from the cathode side to the anode side from being locally accumulated on the surface of the anode and blocking the hydrogen passage. The structure of the third embodiment thus desirably prevents deterioration of the power generation performance of the fuel cell stack 100B. The structure of the third embodiment also enables discharge of the anode off gas containing unreacted gas components unused for power generation to the outside of the fuel cell stack 100B.

### D. Fourth Embodiment

A fuel cell system of a fourth embodiment has a similar structure to that of the fuel cell system 1000B of the third embodiment, except a fuel cell stack that is different from the fuel cell stack 100B of the third embodiment. The following description thus regards the structure of the fuel cell stack in the fourth embodiment.

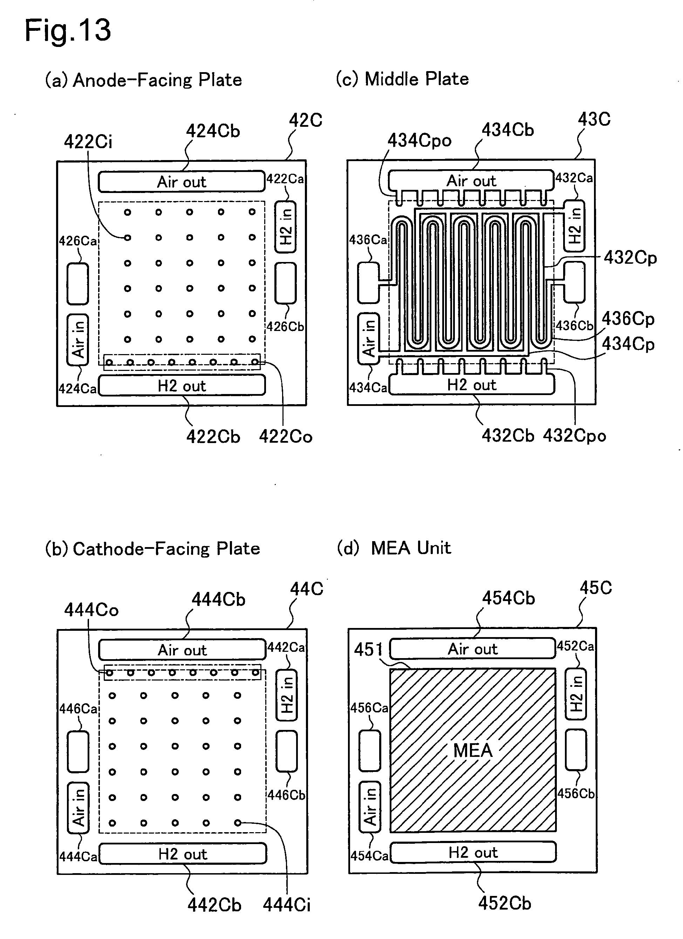

Fig. 13 is plan views showing constituents of a fuel cell module 40C in the fuel cell stack of the fourth embodiment. Like the fuel cell module 40 of the first embodiment, the fuel cell module 40C of the second embodiment is constructed by stacking a separator 41C and an MEA unit 45C. The separator 41C is obtained by stacking an anode-facing plate 42C, a middle plate 43C, and a cathode-facing plate 44C in this sequence and hot pressing the laminate of these three plates. In the structure of this embodiment, the anode-facing plate 42C, the middle plate 43C, and the cathode-facing plate 44C are stainless steel plates of an identical rectangular shape.

The structural difference of the fourth embodiment from the third embodiment includes a two-dimensionally distributed arrangement of multiple air inlets in the cathode-facing plate 44C, in addition to a two-dimensionally distributed arrangement of multiple hydrogen inlets in the anode-facing plate 42C.

Fig. 13(a) is a plan view showing the anode-facing plate 42C that is in contact with the anode face of the MEA unit 45C. As illustrated, the anode-facing plate 42C has a hydrogen supply through hole 422Ca, multiple hydrogen inlets 422Ci, multiple hydrogen outlets 422Co, a hydrogen discharge through hole 422Cb, an air supply through hole 424Ca, an air discharge through hole 424Cb, a cooling water supply through hole 426Ca, and a cooling water discharge through hole 426Cb. The hydrogen supply through hole 422Ca, the hydrogen discharge through hole 422Cb, the air supply through hole 424Ca, the air discharge through hole 424Cb, the cooling water supply through hole 426Ca, and the cooling water discharge through hole 426Cb are substantially rectangular in shape. The multiple hydrogen inlets 422Ci and the multiple hydrogen outlets 422Co are circular apertures of an identical diameter. Like the structure of the third embodiment, the multiple hydrogen inlets 422Ci are two-dimensionally distributed and arranged at substantially equal intervals in a specific area opposed to an MEA 451 of the MEA unit 45C, in order to equalize the in-plane distribution of the hydrogen supply over the whole surface of the anode in the MEA unit 45C. The multiple hydrogen outlets 422Co are arranged to discharge the anode off gas from the periphery of the anode of the MEA unit 45C close to the hydrogen discharge through hole 422Cb.

Fig. 13(b) is a plan view showing the cathode-facing plate 44C that is in contact with the cathode face of the MEA unit 45C. As illustrated, the cathode-facing plate 44C has a hydrogen supply through hole 442Ca, a hydrogen discharge through hole 442Cb, an air supply through hole 444Ca, multiple air inlets 444Ci, multiple air outlets 444Co, an air discharge through hole 444Cb, a cooling water supply through hole 446Ca, and a cooling water discharge through hole 446Cb. As in the anode-facing plate 42C, the hydrogen supply through hole 442Ca, the hydrogen discharge through hole 442Cb, the air supply through hole 444Ca, the air discharge through hole 444Cb, the cooling water supply through hole 446Ca, and the cooling water discharge through hole 446Cb are substantially rectangular in shape. The multiple air inlets 444Ci and the multiple air outlets 444Co are circular apertures of an identical diameter. Like the structure of the second embodiment, the multiple air inlets 444Ci are two-dimensionally distributed and arranged at substantially equal intervals in a specific area opposed to the MEA 451 of the MEA unit 45C, in order to equalize the in-plane distribution of the air supply over the whole surface of the cathode in the MEA unit 45C. The multiple air outlets 444Co are arranged to discharge the cathode off gas from the periphery of the cathode of the MEA unit 45C close to the air discharge through hole 444Cb.

Fig. 13(c) is a plan view showing the middle plate 43C. As illustrated, the middle plate 43C has a hydrogen supply through hole 432Ca, a hydrogen discharge through hole 432Cb, an air supply through hole 434Ca, an air discharge through hole 434Cb, a cooling water supply through hole 436Ca, and a cooling water discharge through hole 436Cb. As in the anode-facing plate 42C and the cathode-facing plate 44C, the hydrogen supply through hole 432Ca, the hydrogen discharge through hole 432Cb, the air supply through hole 434Ca, the air discharge through hole 434Cb, the cooling water supply through hole 436Ca, and the cooling water discharge through hole 436Cb are substantially rectangular in shape. The hydrogen supply through hole 432Ca has multiple hydrogen supply flow channels 432Cp to allow the flow of hydrogen in a distributed manner from the hydrogen supply through hole 432Ca into the multiple hydrogen inlets 422Ci formed in the anode-facing plate 42C. The hydrogen discharge through hole 432Cb has multiple hydrogen discharge flow channels 432Cpo to allow the flow of the anode off gas in a collective manner from the multiple hydrogen outlets 422Co formed in the anode-facing plate 42C to the hydrogen discharge through hole 432Cb. The air supply through hole 434Ca has multiple air supply flow channels 434Cp to allow the flow of the air in a distributed manner from the air supply through hole 434Ca into the multiple air inlets 444Ci formed in the cathode-facing, plate 44C. The air discharge through hole 434Cb has multiple air discharge flow channels 434Cpo to allow the flow of the cathode off gas in a collective manner from the multiple air outlets 444Co formed in the cathode-facing plate 44C to the air discharge through hole 434Cb. As illustrated, in order to cool down a whole heat-producing or exothermic site of the MEA unit 45C, a cooling water flow channel 436Cp is formed in a serpentine layout to connect the cooling water supply through hole 436Ca with the cooling water discharge through hole 436Cb and make the serpentine flow of cooling water between the multiple hydrogen supply flow channels 432Cp and the multiple air supply flow channels 434Cp.

Fig. 13(d) is a plan view showing the cathode face of the MEA unit 45C. As illustrated, the MEA unit 45C has a hydrogen supply through hole 452Ca, a hydrogen discharge through hole 452Cb, an air supply through hole 454Ca, an air discharge through hole 454Cb, a cooling water supply through hole 456Ca, and a cooling water discharge through hole 456Cb formed in a support frame, in addition to the MEA 451. As in the anode-facing plate 42C, the cathode-facing plate 44C, and the middle plate 43C, the hydrogen supply through hole 452Ca, the hydrogen discharge through hole 452Cb, the air supply through hole 454Ca, the air discharge through hole 454Cb, the cooling water supply through hole 456Ca, and the cooling water discharge through hole 456Cb are substantially rectangular in shape. The other structural elements of the MEA unit 45C of the fourth embodiment are identical with those of the MEA unit 45 of the first embodiment.

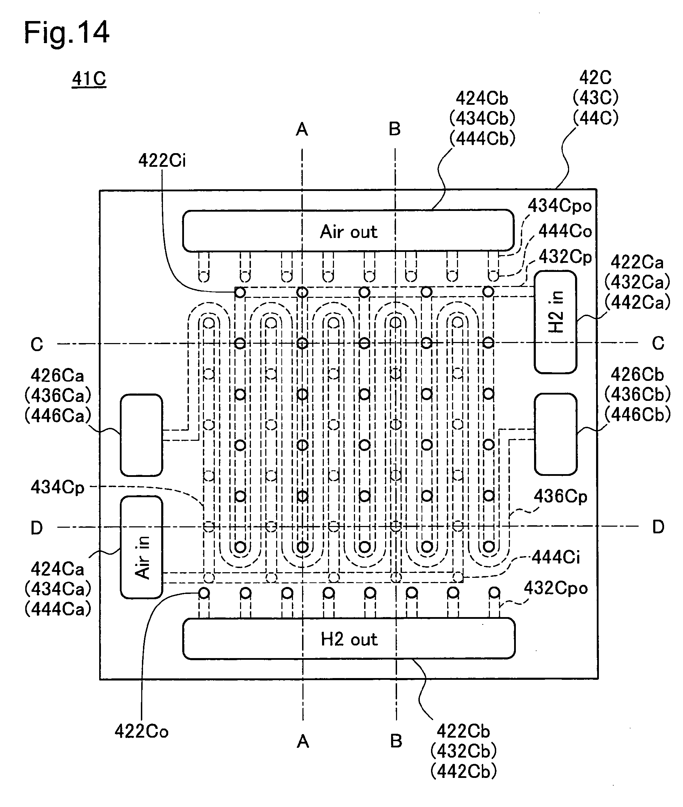

Fig. 14 is a plan view showing the separator 41C. Like the separator 41 of the first embodiment, the separator 41C is designed to have the stack structure of the anode-facing plate 42C, the middle plate 43C, and the cathode-facing plate 44C. Fig. 14 shows the anode-facing plate 42C of the separator 41C.

As clearly understood from the illustration, the hydrogen supply through hole 422Ca, the hydrogen supply through hole 432Ca, and the hydrogen supply through hole 442Ca have an identical shape and are respectively formed at corresponding equivalent positions in the anode-facing plate 42C, the middle plate 43C, and the cathode-facing plate 44C. Similarly the hydrogen discharge through hole 422Cb, the hydrogen discharge through hole 432Cb, and the hydrogen discharge through hole 442Cb have an identical shape and are respectively formed at corresponding equivalent positions in the anode-facing plate 42C, the middle plate 43C, and the cathode-facing plate 44C. The air supply through hole 424Ca, the air supply through hole 434Ca, and the air supply through hole 444Ca have an identical shape and are respectively formed at corresponding equivalent positions in the anode-facing plate 42C, the middle plate 43C, and the cathode-facing plate 44C. The air discharge through hole 424Cb, the air discharge through hole 434Cb, and the air discharge through hole 444Cb have an identical shape and are respectively formed at corresponding equivalent positions in the anode-facing plate 42C, the middle plate 43C, and the cathode-facing plate 44C. The cooling water supply through hole 426Ca, the cooling water supply through hole 436Ca, and the cooling water supply through hole 446Ca have an identical shape and are respectively formed at corresponding equivalent positions in the anode-facing plate 42C, the middle plate 43C, and the cathode-facing plate 44C. The cooling water discharge through hole 426Cb, the cooling water discharge through hole 436Cb, and the cooling water discharge through hole 446Cb have an identical shape and are respectively formed at corresponding equivalent positions in the anode-facing plate 42C, the middle plate 43C, and the cathode-facing plate 44C.

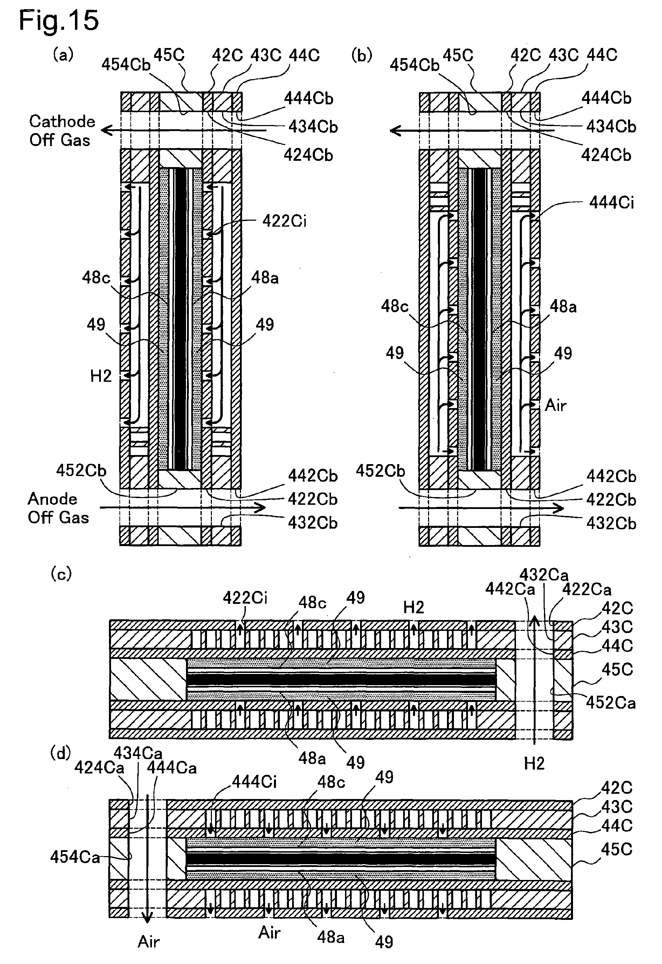

Fig. 15 shows the sectional structure of the fuel cell module 40C. Fig. 15(a) is a sectional view taken on a line A-A in Fig. 14, Fig. 15(b) is a sectional view taken on a line B-B in Fig. 14, Fig. 15(c) is a sectional view taken on a line C-C in Fig. 14, and Fig. 15(d) is a sectional view taken on a line D-D in Fig. 14.

As clearly understood from Figs. 14 and 15, in the fuel cell module 40C, the flow of hydrogen passing through the hydrogen supply through hole 442Ca in the cathode-facing plate 44C, the hydrogen supply through hole 432Ca in the middle plate 43C, and the hydrogen supply through hole 422Ca in the anode-facing plate 42C is branched off from the hydrogen supply through hole 432Ca in the middle plate 43C to enter the multiple hydrogen supply flow channels 432Cp, goes through the multiple hydrogen inlets 422Ci in the anode-facing plate 42C and an anode-side porous metal layer 49, and is diffusively supplied over the whole face of an anode diffusion layer 48a. The anode off gas is flowed out of the multiple hydrogen outlets 422Co in the anode-facing plate 42C in a direction perpendicular to the surface of the porous metal layer 49, goes through the multiple hydrogen discharge flow channels 432Cpo and the hydrogen discharge through hole 432Cb in the middle plate 43C, and is discharged from the hydrogen discharge through hole 442Cb in the cathode-facing plate 44C.

In the fuel cell module 40C, the flow of the air passing through the air supply through hole 424Ca in the anode-facing plate 42C, the air supply through hole 434Ca in the middle plate 43C, and the air supply through hole 444Ca in the cathode-facing plate 44C is branched off from the air supply through hole 434Ca in the middle plate 43C to enter the multiple air supply flow channels 434Cp, goes through the multiple air inlets 444Ci in the cathode-facing plate 44C and a cathode-side porous metal layer 49, and is diffusively supplied over the whole surface of a cathode diffusion layer 48c. The air is then diffusively flowed through the cathode diffusion layer 48c. The cathode off gas is flowed out of the multiple air outlets 444Co in the cathode-facing plate 44C in a direction perpendicular to the surface of the porous metal layer 49, goes through the multiple air discharge flow channels 434Cpo and the air discharge through hole 434Cb in the middle plate 43C, and is discharged from the air discharge through hole 424Cb in the anode-facing plate 42C.

The flow of cooling water passing through the cooling water supply through hole 426Ca in the anode-facing plate 42C, the cooling water supply through hole 436Ca in the middle plate 43C, and the cooling water supply through hole 446Ca in the cathode-facing plate 44C is branched off from the cooling water supply through hole 436Ca in the middle plate 43C, goes through the cooling water flow channel 436Cp, and is discharged from the cooling water discharge through hole 436Cb in the middle plate 43C.

In the fuel cell stack of the fourth embodiment described above, the hydrogen flow goes through the multiple hydrogen inlets 422Ci arranged at substantially equal intervals in the anode-facing plate 42C and is supplied in a direction perpendicular to the anode surface of the MEA 451 to be two-dimensionally distributed over the substantially whole face of the anode for power generation. The air flow goes through the multiple air inlets 444Ci arranged at substantially equal intervals in the cathode-facing plate 44C and is supplied in a direction perpendicular to the cathode surface of the MEA 451 to be two-dimensionally distributed over the substantially whole face of the cathode for power generation. In the anodes of the fuel cell stack, this arrangement effectively prevents water produced in the course of the electrochemical reaction and transmitted through the electrolyte membrane 46 from the cathode side to the anode side from being locally accumulated on the surface of the anode and blocking the hydrogen passage. In the cathodes of the fuel cell stack, this arrangement prevents water produced on the cathode in the course of the electrochemical reaction from being locally accumulated on the surface of the cathode and blocking the air passage. The structure of the fourth embodiment thus desirably prevents deterioration of the power generation performance of the fuel cell stack. The structure of the fourth embodiment also enables discharge of the anode off gas containing unreacted gas components unused for power generation to the outside of the fuel cell stack.

### E. Other Aspects of First to Fourth Embodiments

The first through the fourth embodiments discussed above are to be considered in all aspects as illustrative and not restrictive. There may be many modifications, changes, and alterations of these embodiments without departing from the scope or spirit of the main characteristics of the present invention. Some examples of possible modification are given below.

### E1. Modified Example 1

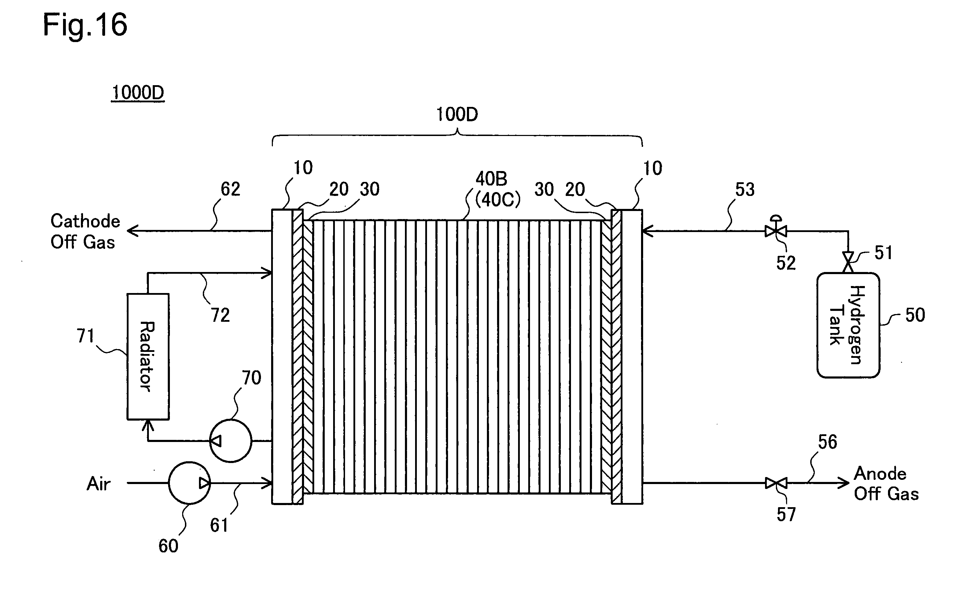

Fig. 16 schematically illustrates the structure of a fuel cell system 1000D in one modified example. The fuel cell system 1000D of this modified structure is designed to omit the circulation pipe 54 and the pump 55 from the fuel cell system of the third embodiment or from the fuel cell system of the fourth embodiment. A fuel cell stack 100D adopted in the fuel cell system 1000D may be the fuel cell stack 100B of the third embodiment or the fuel cell stack of the fourth embodiment. In the fuel cell system 1000D, during power generation, the exhaust valve 57 is closed to drive the fuel cell stack 100D in a specific state of fully consuming the hydrogen supplied to the anodes of the fuel cell stack 100D and of prohibiting discharge of exhaust emission. At a preset timing, the exhaust valve 57 is opened to discharge unreacted gas components unused for power generation and accumulated inside of the fuel cell stack 100D to the outside. This modified structure ensures the efficient use of the fuel gas.

### E2. Modified Example 2

In the structure of the first embodiment, the multiple hydrogen inlets 422i formed in the anode-facing plate 42 are circular apertures of an identical diameter and are arranged at substantially equal intervals. This arrangement is, however, neither essential nor restrictive. The shape, the size, and the layout of the multiple hydrogen inlets 422i may be specified arbitrarily as long as the specification ensures two-dimensional distribution of the hydrogen supply over the whole surface of the anode of the MEA 451.

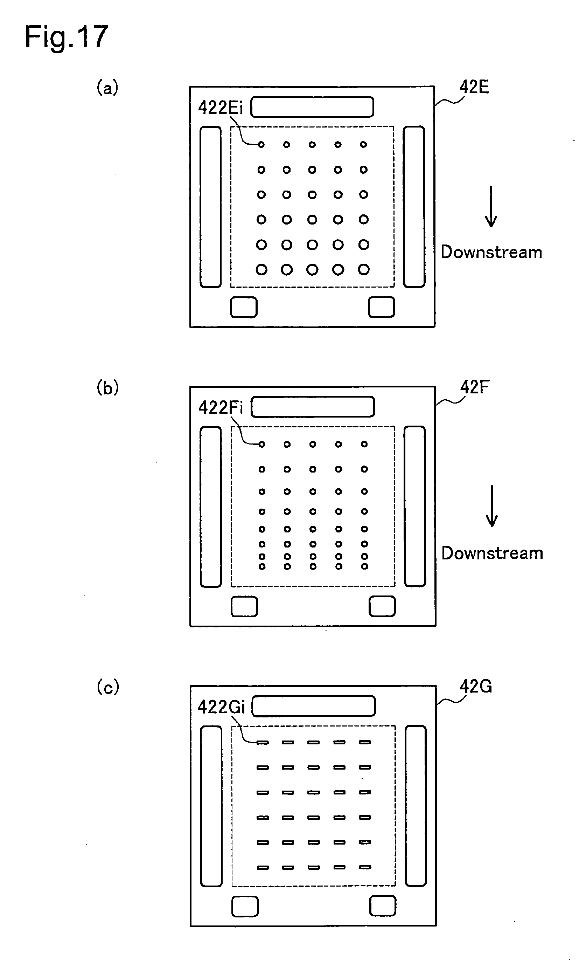

Fig. 17 is plan views showing anode-facing plates 42E, 42F, and 42G as modified examples of the anode-facing plate 42 of the first embodiment.

In the illustrated example of Fig. 17(a), the anode-facing plate 42E has multiple hydrogen inlets 422Ei that are arranged at substantially equal intervals but have different diameters (opening areas) in such a manner that the hydrogen inlets 422Ei located more downstream of the hydrogen flow have wider opening areas. In the arrangement of multiple hydrogen inlets of an identical opening area at equal intervals over the whole area from the upstream to the downstream of the hydrogen flow, the pressure of the hydrogen supply to the surface of the anode of the MEA 451 is lower in the more downstream of the hydrogen flow. In this case, the flow rate of hydrogen supplied through the respective hydrogen inlets per unit time is lower in the more downstream of the hydrogen flow. The structure of the anode-facing plate 42E effectively equalizes the flow rate of hydrogen supplied through the respective hydrogen inlets 422Ei per unit time.

In the illustrated example of Fig. 17(b), the anode-facing plate 42F has multiple hydrogen inlets 422Fi of an identical opening area at different intervals in such a manner that the hydrogen inlets 422Fi in the more downstream of the hydrogen flow are arranged at narrower intervals. This arrangement effectively equalizes the in-plane distribution of the flow rate of the hydrogen supplied over the surface of the anode even in the case of the low hydrogen supply pressure in the downstream of the hydrogen flow.

In the illustrated example of Fig. 17(c), the anode-facing plate 42G has multiple hydrogen inlets 422Gi formed as rectangular slits. The hydrogen inlets may have any other suitable shape.

Such modifications are similarly applicable to the hydrogen inlets in the anode-facing plates of the other embodiments, as well as to the air inlets in the cathode-facing plates of the second embodiment and the fourth embodiment.

### E3. Modified Example 3

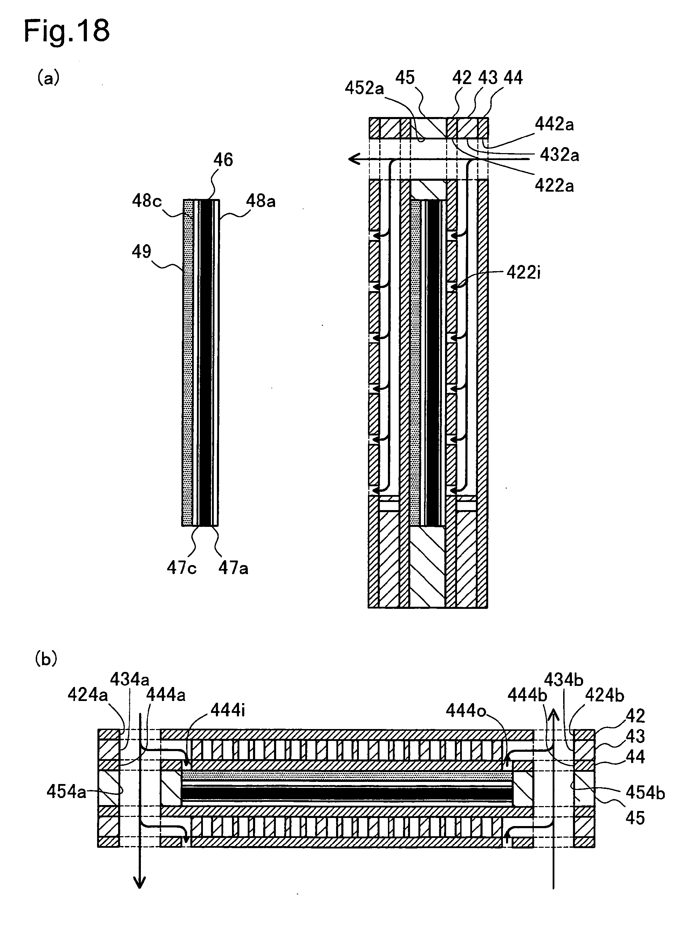

Fig. 18 shows the sectional structure of a fuel cell module as a modified example of the fuel cell module 40 of the first embodiment. The left-side drawing of Fig. 18(a) is a sectional view showing an MEA of an MEA unit in this modified example. The right-side drawing is a sectional view of the fuel cell module of this modified example corresponding to the A-A section in Fig. 4. Fig. 18(b) is a sectional view of the fuel cell module of this modified example corresponding to the B-B section in Fig. 4. The flows of hydrogen, the air, and cooling water in this modified structure are similar to those in the structure of the first embodiment and are thus not specifically explained here. In the fuel cell module of this modified example, there is no porous metal layer formed on the anode of the MEA of he MEA unit. This structure without the porous metal layer on the anode of the MEA still enables the hydrogen flow to be supplied to substantially the whole surface of the anode via the multiple hydrogen inlets 422i formed in the anode-facing plate 42.

### E4. Modified Example 4

In some of the embodiments described above, the anode-facing plate has multiple hydrogen inlets in the two-dimensionally distributed arrangement. In the other embodiments, the anode-facing plate has multiple hydrogen inlets in the two-dimensionally distributed arrangement, while the cathode-facing plate has multiple air inlets in the two-dimensionally distributed arrangement. In general, at least one of the anode-facing plate and the cathode-facing plate is required to have multiple inlets in a two-dimensionally distributed arrangement.

### E5. Modified Example 5

In the embodiments described above, the cooling water flow channel is formed in the middle plate. This is, however, neither essential nor restrictive. In one modification, a cooling water flow channel may be formed in a separate member. Formation of the cooling water flow channel in the middle plate as in the above embodiments, however, desirably decreases the total thickness of the separator and thereby downsizes the fuel cell stack, compared with the structure having a cooling water flow channel formed in a separate member. In the structures of the above embodiments, the cooling water flow channel and the gas flow channels are formed in one single plate. This desirably reduces the total number of parts as the constituents of the separator, compared with the structure having the gas flow channels and the cooling water flow channel formed in multiple separate members.

### E6. Modified Example 6

In the embodiments described above, the anode-facing plate, the middle plate, and the cathode-facing plate are all flat plates. This is, however, neither essential nor restrictive. As explained in the technique of the above-cited Patent Document 1, an anode-facing plate and a cathode-facing plate with grooves provided for gas flow paths may be adopted for the separator. The use of the flat plates for the anode-facing plate, the middle plate, and the cathode-facing plate, however, advantageously facilitates the processing.

In the structures of the first through the fourth embodiments described above, the hydrogen flow or the air flow passes through the multiple hydrogen inlets formed in the anode-facing plate or through the multiple air inlets formed in the cathode-facing plate and is supplied in a direction perpendicular to the surface of the anode or to the surface of the cathode to be two-dimensionally distributed over substantially the whole surface of the anode or over substantially the whole surface of the cathode. In the structures of fifth through seventh embodiments described below, on the other hand, water is flowed through multiple hydrogen inlets (through holes) formed in an anode-facing plate and is supplied in a two-dimensionally distributed manner to an electrolyte membrane via a gas diffusion layer and an anode.

### F. Fifth Embodiment

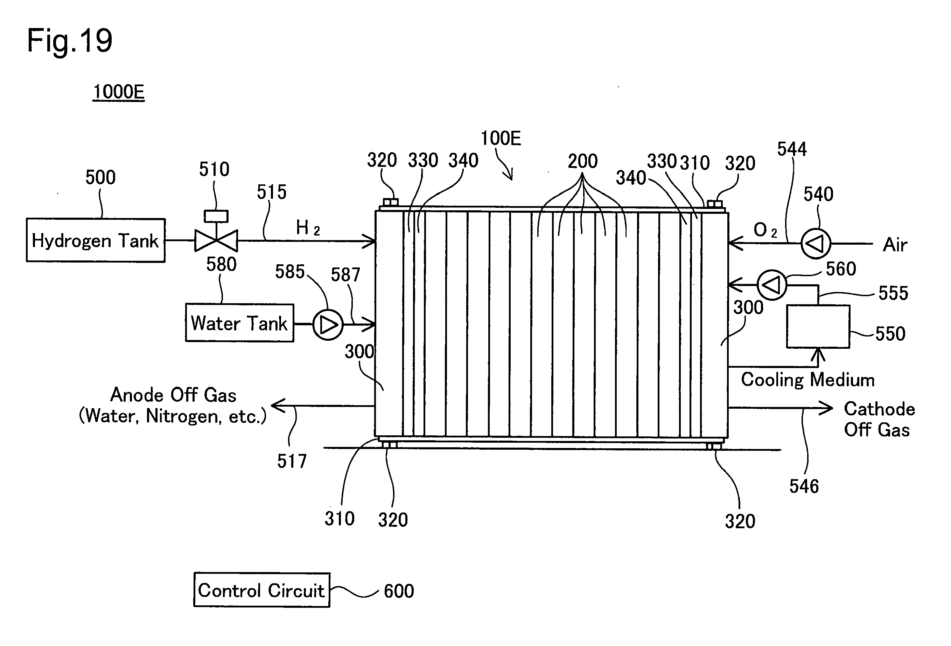

Fig. 19 schematically illustrates the structure of a fuel cell system 1000E including a fuel cell stack 100E in a fifth embodiment of the invention. The fuel cell stack 100E of this embodiment uses polymer electrolyte fuel cells that are relatively small in size but have high power generation efficiency. The fuel cell stack 100E includes multiple fuel cell modules 200, a pair of end plates 300, a pair of tension plates 310, a pair of insulator plates 330, and a pair of power collectors 340. The multiple fuel cell modules 200 are held by the pair of end plates 300 across the respective insulator plates 330 and the respective power collectors 340. In the fuel cell stack 100E, the multiple fuel cell modules 200 are laminated to form a layered structure. The tension plates 310 are attached to the respective end plates 300 by means of bolts 320, so that the multiple fuel cell modules 200 are fastened under a preset force in its stacking direction.

The fuel cell stack 100E of this embodiment receives a supply of water from a water tank 580, in addition to the supplies of reactive gases (a fuel gas and an oxidizing gas) for the electrochemical reaction and the supply of a cooling medium (for example, water, an antifreeze solution like ethylene glycol, or the air) for cooling down the fuel cell stack 100E.

A supply of hydrogen is introduced from a hydrogen tank 500 of high-pressure hydrogen via a pipe 515 and is fed as a fuel gas to anodes in the fuel cell stack 100E. A shut valve 510 and a regulator (not shown) are provided in the pipe 515 to regulate the flow of hydrogen supply. The fuel cell stack 100E has an exhaust pipe 517, which is connected with a fuel gas exhaust manifold to discharge an anode off gas containing unreacted gas components unused for the electrochemical reaction from the anodes to the outside of the fuel cell stack 100E as explained later.

A supply of the air is compressed by a compressor 540 and is fed as an oxidizing gas via a pipe 544 to cathodes of the fuel cell stack 100E. A cathode off gas exhausted from the cathodes of the fuel cell stack 100E is flowed through an exhaust pipe 546 and is released to the atmosphere.

A flow of the cooling medium is supplied from a radiator 550 via a pipe 555 to the fuel cell stack 100E. The cooling medium flowed out of the fuel cell stack 100E is reintroduced into the radiator 550 via the pipe 555 and is recirculated to the fuel cell stack 100E. A circulation pump 560 is provided on the pipe 555 to recirculate the flow of the cooling medium.

A supply of water is introduced from the water tank 580 by means of a water supply pump 585 to be flowed through a pipe 587 to the fuel cell stack 100E. As explained later, this water flow is supplied to the anodes of the fuel cell stack 100E.

A control circuit 600 is constructed as a microcomputer-based logic circuit and includes a CPU (not shown) designed to perform diverse arithmetic operations according to preset control programs, a ROM (not shown) designed to store the control programs and control data required for the diverse arithmetic operations performed by the CPU, a RAM (not shown) designed to temporarily read and write various data required for the diverse arithmetic operations performed by the CPU, and input-output ports arranged to input and output various signals. The control unit 600 regulates and controls the relevant parts involved in power generation by the fuel cell stack 100E, for example, the shut valve 510, the compressor 540, the circulation pump 560, and the water supply pump 585.

### F2. Structure of Fuel Cell Module

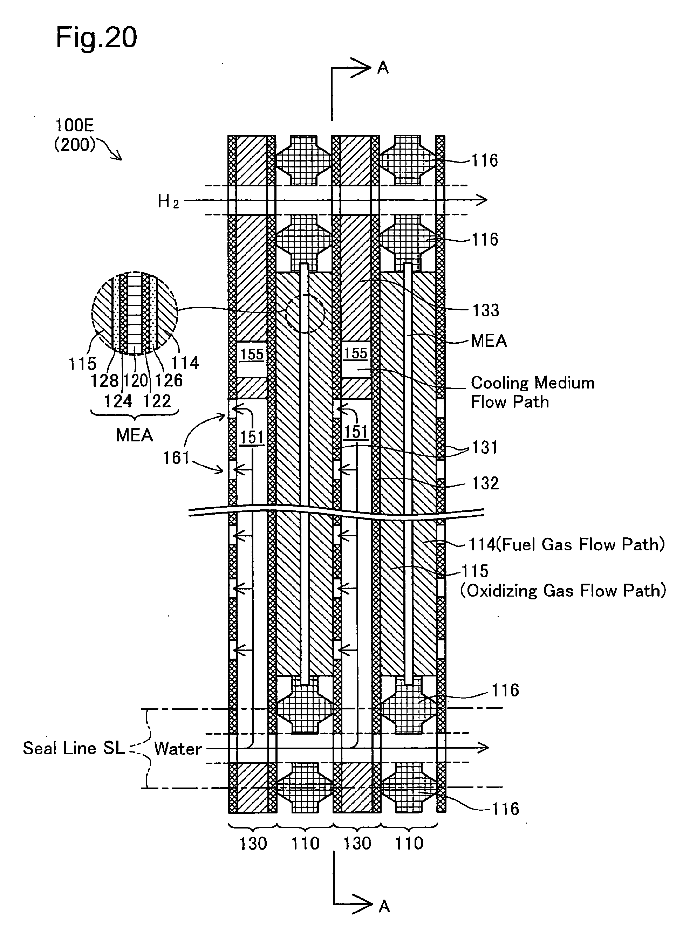

Fig. 20 is a sectional view showing the schematic structure of the fuel cell modules 200 in the fuel cell stack 100E of the fifth embodiment. As shown in Fig. 20, the fuel cell modules 200 are constructed by alternately stacking separators 130 and MEA units 110. In the description below, a direction of alternately stacking the separators 130 and the MEA units 110 is referred to as stacking direction (equivalent to 'x' direction), and a direction parallel to the faces of the fuel cell modules 200 is referred to as a planar direction.

The MEA unit 110 includes an MEA, a pair of second gas diffusion layers 114 and 115 arranged outside the MEA, and a seal member 116. The MEA includes an electrolyte membrane 120, an anode 122 and a cathode 124 arranged across the electrolyte membrane 120 and formed as catalytic electrodes on the opposed faces of the electrolyte membrane 120, and a pair of first gas diffusion layers 126 and 128 arranged outside the respective catalytic electrodes. An effective area for actual power generation in the MEA may hereafter be specifically referred to as a power generation area.

The electrolyte membrane 120 is a proton-conductive ion exchange membrane made of an adequate solid polymer material, for example, a perfluorocarbon sulfonic acid-containing fluororesin, and has favorable electrical conductivity in the wet state. The anode 122 and the cathode 124 include a selected catalyst for accelerating the electrochemical reaction, for example, platinum or a platinum alloy. The first gas diffusion layers 126 and 128 are, for example, porous carbon members.

The second gas diffusion layers 114 and 115 are made of an electrically-conductive porous metal material, such as metal foam or metal mesh of titanium (Ti). The second gas diffusion layers 114 and 115 are located to fully occupy the space defined by the MEA and the separators 130. The inner volumes of the second gas diffusion layers 114 and 115 respectively have a large number of pores and function as inner-fuel cell module gas flow paths for the reactive gases (the fuel gas and the oxidizing gas). The fuel gas is supplied to and flowed through the second gas diffusion layer 114. The inner-fuel cell module gas flow path formed in the second gas diffusion layer 114 is thus referred to as the fuel gas flow path. The oxidizing gas is supplied to and flowed through the second gas diffusion layer 115. The inner-fuel cell module gas flow path formed in the second gas diffusion layer 115 is thus referred to as the oxidizing gas flow path.

The seal member 116 is located between each adjacent pair of separators 130 and is arranged to surround the MEA and the second gas diffusion layers 114 and 115. The seal member 116 is made of an insulating rubber material, such as silicon rubber, butyl rubber, or fluororubber, and is integrally formed with the MEA. One typical procedure of forming the seal member 116 locates an MEA to be fit in a cavity of a mold and injection molds the resin material into the mold. The resin material is then soaked into the porous first gas diffusion layers, so that the MEA and the seal member 116 are closely joined with each other to ensure the sufficient gas sealing property between the opposed faces of the MEA. The seal member 116 also works as a support member for supporting the MEA.

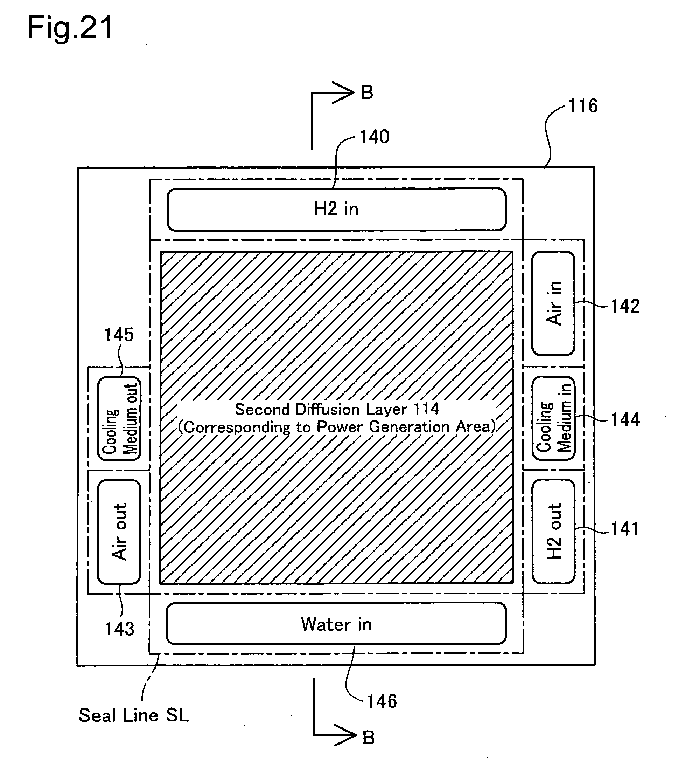

Fig. 21 is a plan view showing the sectional structure of the MEA unit 110 taken on a line A-A of the fuel cell module 200 in Fig. 20. As shown in Fig. 21, the seal member 116 is a rectangular thin plate member and has seven through holes formed in its periphery to form parts of respective manifolds and a substantially rectangular center hole to receive the MEA and the second gas diffusion layers 114 and 115 (given as an area filled with slant lines) fitted therein. The area filled with slant lines in Fig. 21 corresponds to the power generation area.

Although not being specifically illustrated in the plan view of Fig. 21, the seal member 116 actually has a predetermined concave and convex contour. In the fuel cell stack 100E, the seal member 116 is in contact with the adjacent separator 130 via projections of the seal member 116 formed at positions surrounding the seven through holes for the manifolds and the substantially rectangular center hole. The contact position of the seal member 116 with the separator 130 (shown by the one-dot chain line in Fig. 20) is shown as a seal line SL in the plan view of Fig. 21. The seal member 116 is made of an elastic resin material and effects its sealing property at the position of the seal line SL by application of a pressing force in a direction parallel to the stacking direction in the fuel cell stack 100E.

The contours of the seal member 116 and the second gas diffusion layer 114 taken on a line B-B in Fig. 21 are equivalent to the sectional shapes of the seal member 116 and the second gas diffusion layer 114 in Fig. 20.

### F3. Structure of Separator 130

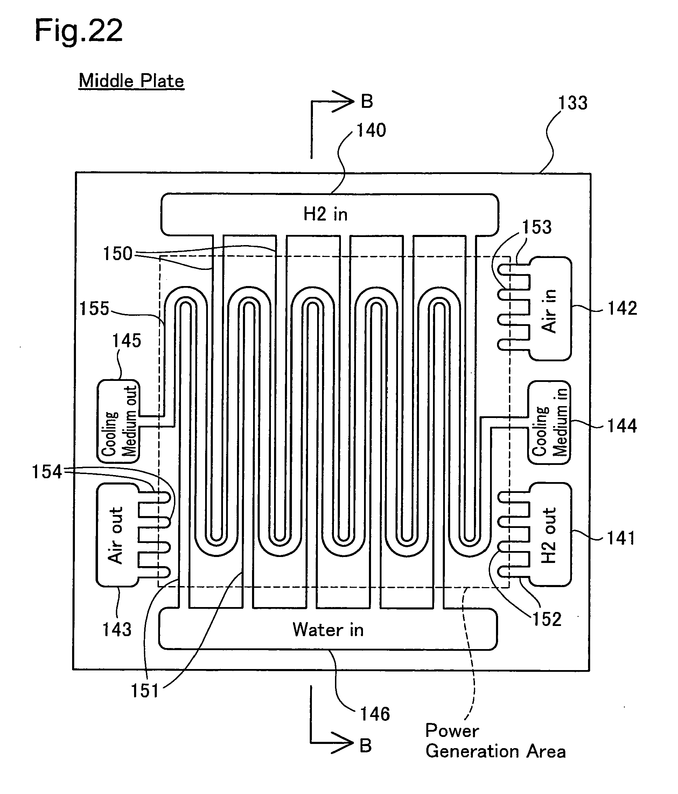

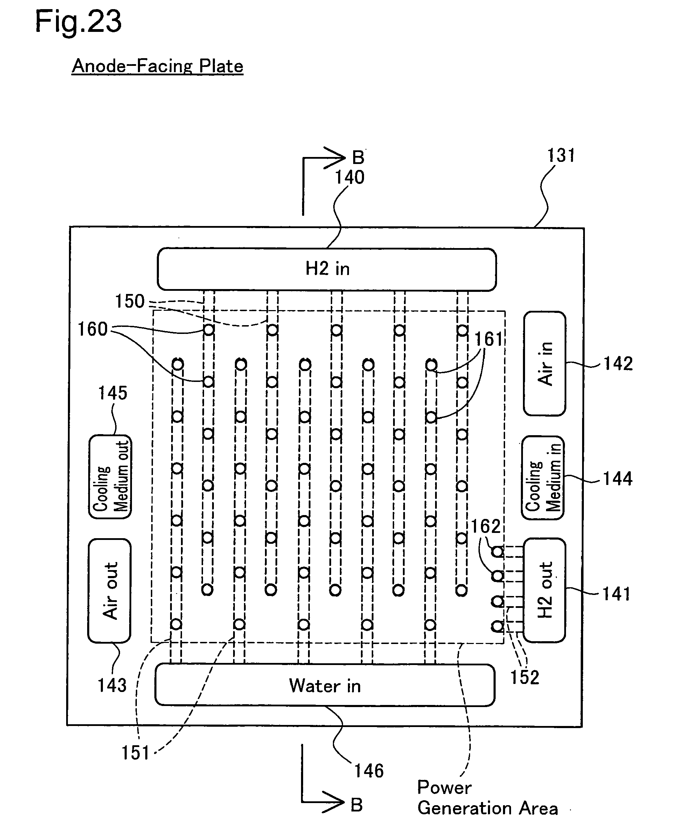

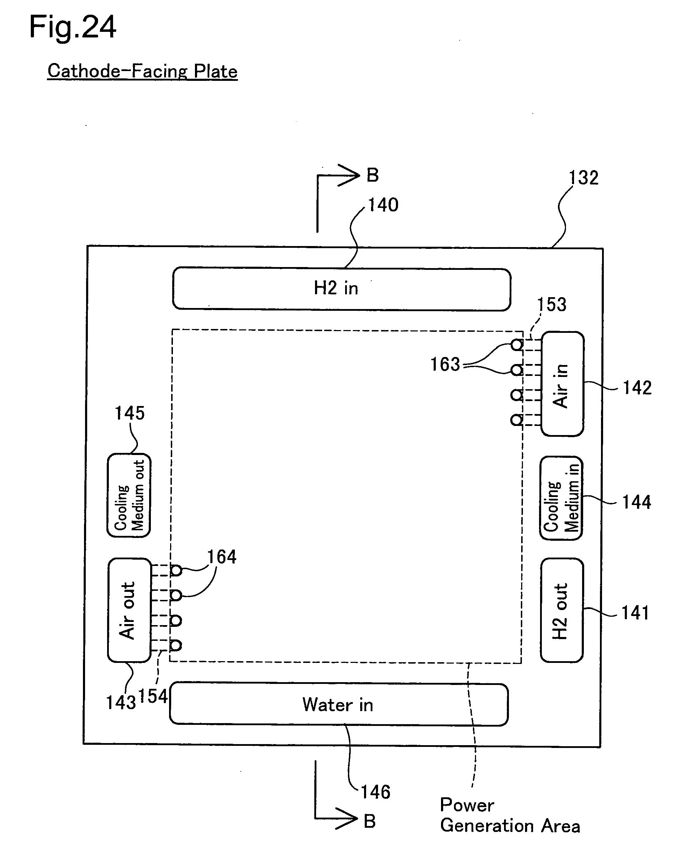

Fig. 22 shows the contour of a middle plate 133 in the fifth embodiment. Fig. 23 shows the contour of an anode-facing plate 131 in the fifth embodiment. Fig. 24 shows the contour of a cathode-facing plate 132 in the fifth embodiment. The separator 130 consists of three plates having an identical contour in the stacking direction and is thus constructed as a three-layered separator. The separator 130 includes the anode-facing plate 131 in contact with the second gas diffusion layer 114, the cathode-facing plate 132 in contact with the second gas diffusion layer 115, and the middle plate 133 located between the anode-facing plate 131 and the cathode-facing plate 132. These three plates are laminates of an electrically conductive material, for example, metal like titanium (Ti) and are stacked and joined integrally by diffusion bonding or another suitable technique. These three plates have flat surfaces with holes formed in specific shapes at selected locations. The broken lines in Figs. 22, 23, and 24 correspond to the outline of the power generation area (see Fig. 21) in the stack of the MEA units 110 and the separators 130. The contours of the middle plate 133, the anode-facing plate 131, and the cathode-facing plate 132 taken on lines B-B in Figs. 22, 23, and 24 are equivalent to the sectional shapes of the middle plate 133, the anode-facing plate 131, and the cathode-facing plate 132 in Fig. 20.

As shown in Figs. 22, 23, and 24, the middle plate 133, the anode-facing plate 131, and the cathode-facing plate 132 respectively have seven through holes 140 to 146 at equivalent positions. In the stack of these plates forming the fuel cell module 200, the corresponding through holes formed as each equivalent position as one of the seven through holes in the respective plates overlap one another to form a manifold for introducing a fluid in parallel with the stacking direction in the fuel cell module 200.

The through holes 140 constitute a fuel gas supply manifold (expressed as 'H2 in' in the drawings) arranged to distribute the flow of fuel gas supplied to the fuel cell stack 100E into the respective MEA units 110. The through holes 141 constitute a fuel gas exhaust manifold (expressed as 'H2 out' in the drawings) arranged to discharge the joint flow of anode off gas from the respective MEA units 110 to the outside of the fuel cell stack 100E.

The through holes 142 constitute an oxidizing gas supply manifold (expressed as 'Air in' in the drawings) arranged to distribute the flow of oxidizing gas supplied to the fuel cell stack 100E into the respective MEA units 110. The through holes 143 constitute an oxidizing gas exhaust manifold (expressed as 'Air out' in the drawings) arranged to discharge the joint flow of cathode off gas from the respective MEA units 110 to the outside of the fuel cell stack 100E.

The through holes 144 constitute a cooling medium supply manifold (expressed as 'Cooling Medium in' in the drawings) arranged to distribute the flow of cooling medium fed to the fuel cell stack 100E into the respective separators 130. The through holes 145 constitute a cooling medium discharge manifold (expressed as 'Cooling Medium out' in the drawings) arranged to discharge the joint flow of cooling medium from the respective separators 130 to the outside of the fuel cell stack 100E.

The through holes 146 constitute a water supply manifold (expressed as 'Water in' in the drawings) arranged to distribute the flow of water supplied from the water tank 580 to the fuel cell stack 100E into the anodes 122.

As shown in Fig. 22, the through holes 140 to 146 in the middle plate 133 have different shapes from those of the through holes 140 to 146 in the other plates 131 and 132. The through hole 140 in the middle plate 133 has multiple long channels protruded from one side facing a specific area (specific area-facing side) corresponding to the power generation area toward the periphery of the opposite through hole 146 in the specific area. These channels are hereafter referred to as communicating channels 150.

The through hole 146 in the middle plate 133 has multiple long channels protruded from its specific area-facing side toward the periphery of the opposite through hole 140 in the specific area. These channels are hereafter referred to as communicating channels 151. As shown in Fig. 22, the communication channels 150 and the communication channels 151 are formed to be alternately arranged in the planar direction.

The through holes 141, 142, and 143 in the middle plate 133 respectively have multiple short channels protruded from their respective specific area-facing sides toward the specific area. These channels are respectively referred to as communication channels 152, 153, and 154.

The through hole 144 and the through hole 145 in the middle plate 133 are interconnected by a communication channel 155. The communication channel 155 is formed in a serpentine layout in the specific area corresponding to the power generation area to go around the communication channels 150 and 151. In the stack of the middle plate 133 between the anode-facing plate 131 and the cathode-facing plate 132, the cooling medium supply manifold formed by the through holes 144 communicates with the cooling medium discharge manifold formed by the through holes 145 to allow the flow of cooling medium from the cooling medium supply manifold to the cooling medium discharge manifold and cool down the inside of the fuel cell stack 100E.

As shown in Fig. 23, the anode-facing plate 131 has multiple through holes as multiple inlets 160 arranged at substantially equal intervals in a specific area corresponding to the power generation area and at positions corresponding to the communicating channels 150 formed in the middle plate 133. Namely the multiple inlets 160 are two-dimensionally distributed in the specific area of the anode-facing plate 131 corresponding to the power generation area. In the stack of the anode-facing plate 131 and the middle plate 133, the multiple inlets 160 communicate with the fuel gas supply manifold formed by the through holes 140 via the communicating channels 150.

The anode-facing plate 131 also has multiple through holes as multiple inlets 161 arranged at substantially equal intervals in the specific area corresponding to the power generation area and at positions corresponding to the communicating channels 151 formed in the middle plate 133. Namely the multiple inlets 161 are two-dimensionally distributed in the specific area of the anode-facing plate 131 corresponding to the power generation area. In the stack of the anode-facing plate 131 and the middle plate 133, the multiple inlets 161 communicate with the water supply manifold formed by the through holes 146 via the communicating channels 151.

The anode-facing plate 131 also has an array of multiple through holes as an array of multiple outlets 162 aligned in the specific area corresponding to the power generation area and at positions corresponding to the communicating channels 152 formed in the middle plate 133. In the stack of the anode-facing plate 131 and the middle plate 133, the multiple outlets 162 communicate with the fuel gas exhaust manifold formed by the through holes 141 via the communicating channels 152.

As shown in Fig. 24, the cathode-facing plate 132 has an array of multiple through holes as an array of multiple inlets 163 aligned in a specific area corresponding to the power generation area and at positions corresponding to the communicating channels 153 formed in the middle plate 133. The cathode-facing plate 132 also has an array of multiple through holes as an array of multiple outlets 164 aligned in the specific area corresponding to the power generation area and at positions corresponding to the communicating channels 154 formed in the middle plate 133. In the stack of the cathode-facing plate 132 and the middle plate 133, the multiple inlets 163 communicate with the oxidizing gas supply manifold formed by the through holes 142 via the communicating channels 153. Similarly the multiple outlets 164 communicate with the oxidizing gas exhaust manifold formed by the through holes 143 via the communicating channels 154.

Inside the fuel cell stack 100E (the fuel cell module 200), the flow of water is introduced through the water supply manifold formed by the through holes 146 in the respective plates 131, 133, and 132, goes into the inner-fuel cell module gas flow path (fuel gas flow path) formed in the second gas diffusion layer 114 via the space defined by the communicating channel 155 (see Fig. 20) in the middle plate 133 (see Fig. 22) and the two-dimensionally distributed multiple inlets 161 in the anode-facing plate 131 (see Fig. 23), and is supplied across the anode 122 to the electrolyte membrane 120. This arrangement enables water to be supplied in a two-dimensionally distributed manner to the electrolyte membrane 120 and thus ensures the substantially homogeneous supply of water over the whole surface of the electrolyte membrane 120. Such homogeneous supply of water effectively prevents the electrolyte membrane 120 from being locally dried and thereby prevents deterioration of the cell performance of the fuel cell stack 100E. In some operating condition of the fuel cell stack 100E causing evaporation of the water supply, the fuel cell stack 100E is cooled down by the latent heat of the water evaporation.

Inside the fuel cell stack 100E (the fuel cell module 200), the flow of the fuel gas is introduced through the fuel gas supply manifold formed by the through holes 140 in the respective plates 131, 133, and 132, goes into the inner-fuel cell module gas flow path (fuel gas flow path) formed in the second gas diffusion layer 114 via the space defined by the communicating channels 150 in the middle plate 133 and the two-dimensionally distributed multiple inlets 160 in the anode-facing plate 131, and is diffused both in the planar direction and in the direction perpendicular to the planar direction (that is, in the stacking direction). The fuel gas diffused in the stacking direction goes through the second gas diffusion layer 114 and the first gas diffusion layer 126 and reaches the anode 122 to be subjected to the electrochemical reaction. This arrangement enables the fuel gas to be supplied to the anode 122 in a two-dimensionally distributed manner and thus ensures the substantially homogeneous supply of the fuel gas over the whole surface of the anode 122. Such homogeneous supply of the fuel gas effectively prevents deterioration of the cell performance of the fuel cell stack 100E.

The proton moves across the electrolyte membrane 120 from the anode 122 to the cathode 124. The proton moves in a hydrated state of attracting a water molecule. In the fuel cell stack 100E of this embodiment, the water flowing through the water supply manifold is supplied across the anode 122 to the electrolyte membrane 120. In other words, the water flowing through the water supply manifold is supplied to the electrolyte membrane 120 from the upstream of the proton moving direction in the fuel cell stack 100E of this embodiment. The electrolyte membrane 120 is thus kept moist in its thickness direction.

The fuel gas subjected to the electrochemical reaction and flowed through the fuel gas flow path in the second gas diffusion layer 114 goes through the array of multiple outlets 162 in the anode-facing plate 131 and the space defined by the communicating channels 152 in the middle plate 133, and is discharged into the fuel gas exhaust manifold formed by the through holes 141.

Similarly, inside the fuel cell stack 100E, the flow of the oxidizing gas is introduced through the oxidizing gas supply manifold formed by the through holes 142 in the respective plates 131, 133, and 132, goes into the inner-fuel cell module gas flow path (oxidizing gas flow path) formed in the second gas diffusion layer 115 via the space defined by the communicating channels 153 in the middle plate 133 and the array of multiple inlets 163 in the cathode-facing plate 132 (see Fig. 24), and is diffused both in the planar direction and in the stacking direction. The oxidizing gas diffused in the stacking direction goes through the second gas diffusion layer 115 and the first gas diffusion layer 128 and reaches the cathode 124 to be subjected to the electrochemical reaction. The oxidizing gas subjected to the electrochemical reaction and flowed through the oxidizing gas flow path in the second gas diffusion layer 115 goes through the array of multiple outlets 164 in the cathode-facing plate 132 and the space defined by the communicating channels 154 in the middle plate 133, and is discharged into the oxidizing gas exhaust manifold formed by the through holes 143.

The multiple inlets 161 in the structure of this embodiment are equivalent to the multiple water inlets in the claims of the invention. The communicating channels 151 are equivalent to the water supply flow channels in the claims of the invention. The communicating channel 155 corresponds to the cooling medium flow channel in the claims of the invention. The multiple inlets 160 correspond to the multiple reactive gas inlets in the claims of the invention. The communicating channels 150 are equivalent to the reactive gas supply flow channel in the claims of the invention.

### G. Sixth Embodiment

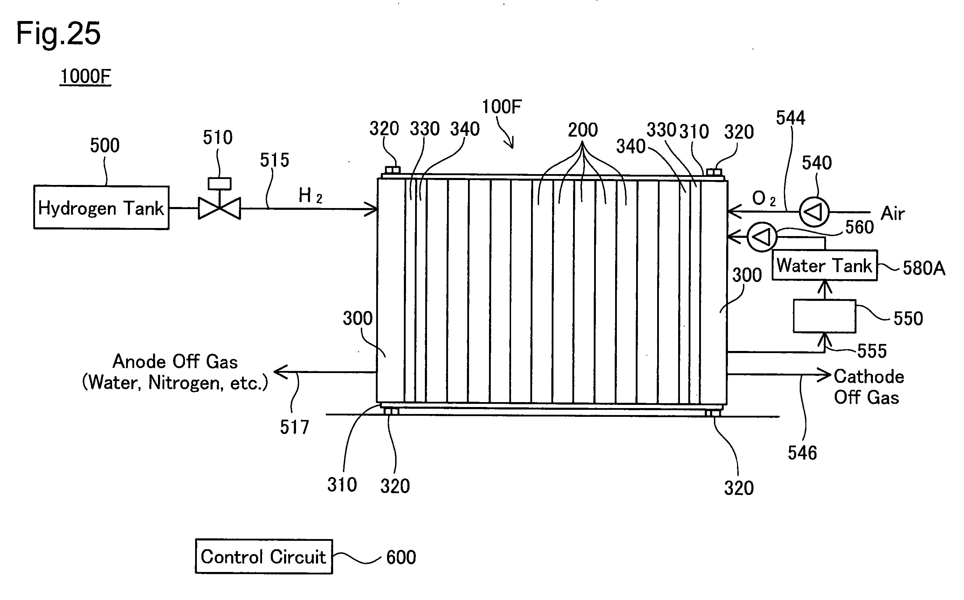

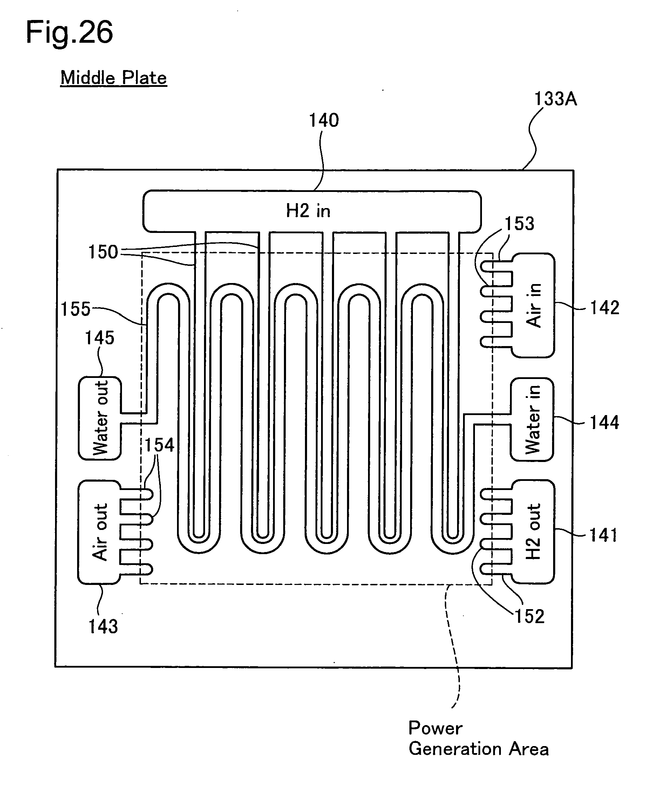

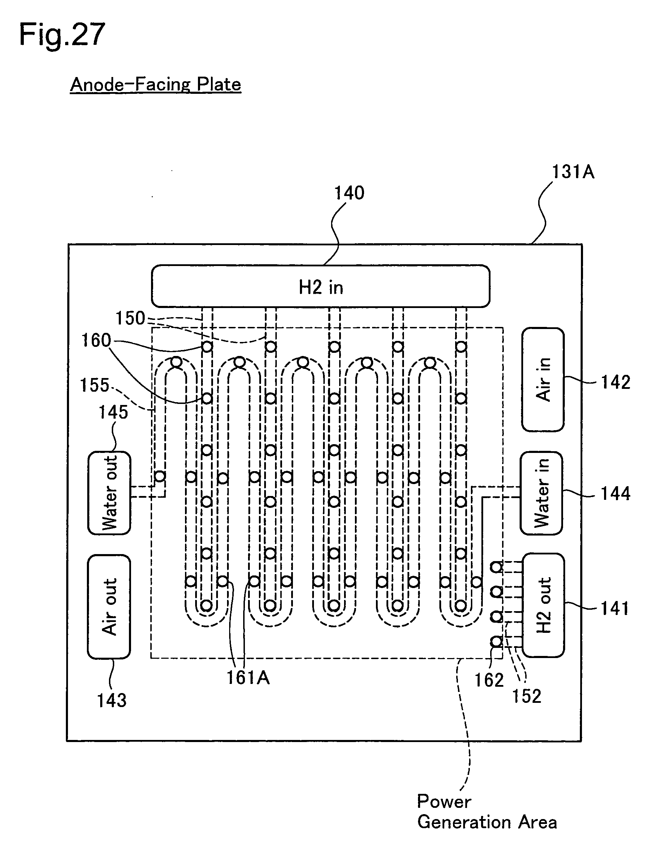

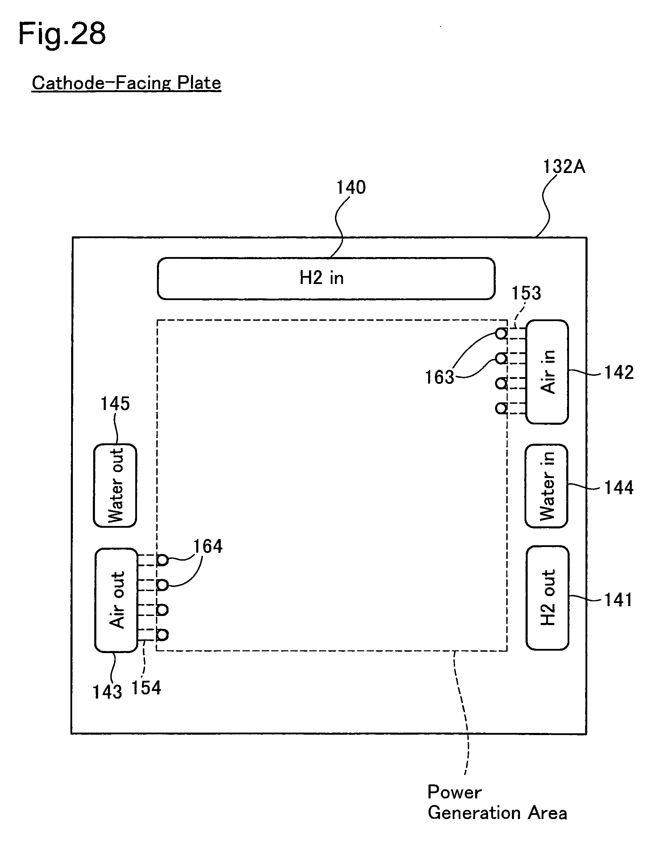

Fig. 25 schematically illustrates the structure of a fuel cell system 1000F including a fuel cell stack 100F in a sixth embodiment of the invention. Fig. 26 shows the contour of a middle plate 133A in the sixth embodiment. Fig. 27 shows the contour of an anode-facing plate 131A in the sixth embodiment. Fig. 28 shows the contour of a cathode-facing plate 132A in the sixth embodiment. The fuel cell stack 100F of the sixth embodiment has a similar structure to that of the fuel cell stack 100E of the fifth embodiment. The like elements are expressed by the like numerals and are not specifically explained here.

As shown in Fig. 26, 27, and 28, none of the middle plate 133A, the anode-facing plate 131A, and the cathode-facing plate 132A adopted for the fuel cell stack 100F of this embodiment have through holes 146. Namely the fuel cell stack 100F has no water supply manifold. The fuel cell stack 100F accordingly excludes the water tank 580, the water supply pump 585, and the pipe 587 used for the supply of water into the water supply manifold as shown in Fig. 25. Although not being specifically illustrated, the seal member 116 has no through hole 146.

The fuel cell stack 100F of this embodiment uses water as the cooling medium for cooling down the fuel cells and accordingly has a water tank 580A provided on the pipe 555 as shown in Fig. 25.

As the fuel cell stack 100F of this embodiment has no water supply manifold, the communicating channels 151 and the multiple inlets 161 are respectively omitted from the middle plate 133A and from the anode-facing plate 131A.

The anode-facing plate 131A has multiple through holes as multiple inlets 161A arranged at preset intervals in a specific area corresponding to the power generation area and at positions corresponding to the communicating channel 155 formed in the middle plate 133A. Namely the multiple inlets 161A are two-dimensionally distributed in the specific area of the anode-facing plate 131A corresponding to the power generation area. In the stack of the anode-facing plate 131A and the middle plate 133A, the multiple inlets 161A communicate with the communicating channel 155.

Inside the fuel cell stack 100F of the embodiment, the flow of water is introduced through the cooling medium supply manifold formed by the through holes 144 in the respective plates 131A, 133A, and 132A, goes into the inner-fuel cell module gas flow path (fuel gas flow path) formed in the second gas diffusion layer 114 via the space defined by the communicating channel 155 in the middle plate 133A (see Fig. 26) and the two-dimensionally distributed multiple inlets 161A in the anode-facing plate 131A (see Fig. 27), and is supplied across the anode 122 to the electrolyte membrane 120. This arrangement enables water to be supplied in a two-dimensionally distributed manner to the electrolyte membrane 120 and thus ensures the substantially homogeneous supply of water over the whole surface of the electrolyte membrane 120. Such homogeneous supply of water effectively prevents the electrolyte membrane 120 from being locally dried and thereby prevents deterioration of the cell performance of the fuel cell stack 100F. In some operating condition of the fuel cell stack 100F causing evaporation of the water supply, the fuel cell stack 100F is cooled down by the latent heat of the water evaporation. Like the fuel cell stack 100 of the first embodiment, the fuel cell stack 100F of the sixth embodiment has no water supply manifold. This structure desirably facilitates processing of the respective plates as the constituents of the separators 130 and advantageously downsizes the respective plates.

The communicating channel 155 in the structure of the embodiment is equivalent to the cooling medium flow channel and the water supply flow channel in the claims of the invention.

### H. Seventh Embodiment

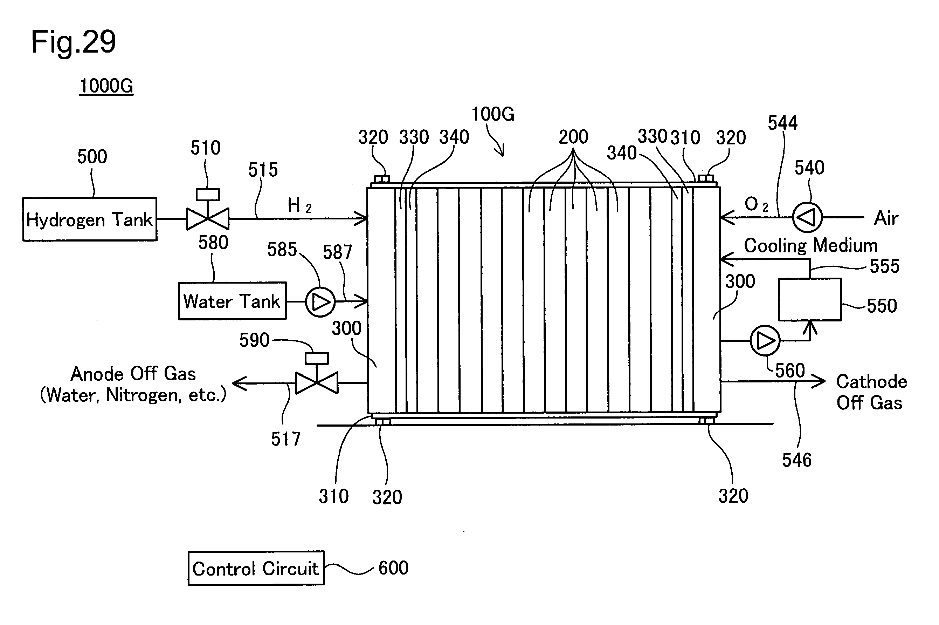

Fig. 29 schematically illustrates the structure of a fuel cell system 1000G including a fuel cell stack 100G in a seventh embodiment of the invention. The fuel cell stack 100G of the seventh embodiment has a similar structure to that of the fuel cell stack 100E of the fifth embodiment, except a shut valve 590 provided on the exhaust pipe 517. The like elements are expressed by the like numerals and are not specifically explained here. The shut valve 590 is controlled by the control circuit 600.

In the fuel cell stack 100G of the embodiment, while the oxidizing gas is supplied to the cathodes 124 by means of the compressor 540, the control circuit 600 opens the shut valve 510 to supply the fuel gas to the anodes 122. The electrochemical reaction for power generation is performed in the fuel cell stack 100G with the shut valve 590 closed by the control circuit 600. Namely the fuel cell stack 100G is designed as anode dead end-type fuel cells where the power generation is performed with the fuel gas supply to the anodes 122 not discharged outside of the fuel cell stack 100G but retained inside. Nitrogen and other impurities leaked from the cathode 124 across the electrolyte membrane 120 may be accumulated in the second gas diffusion layer 114. The control circuit 600 may thus open the shut valve 590 at adequate timings to release the nitrogen and the other impurities accumulated in the second gas diffusion layer 114 with the flow of the anode off gas.

As described above, in the fuel cell stack 100G of this embodiment, the power generation is performed with the shut valve 590 closed to make the fuel gas retained inside the fuel cell stack 100G. This arrangement effectively enables the fuel gas to be substantially fully consumed on the anodes 122 and thereby improves the fuel efficiency of the fuel gas. The supply of the fuel gas to the anodes 122 in a two-dimensionally distributed manner ensures the substantially homogeneous supply of the fuel gas over the whole surface of the anodes 122 and improves the consumption efficiency of the fuel gas on the anodes 122. This arrangement effectively improves the cell performance of the fuel cell stack 100G.

### I. Other Aspects of Fifth to Seventh Embodiments

The fifth through the seventh embodiments discussed above are to be considered in all aspects as illustrative and not restrictive. There may be many modifications, changes, and alterations of these embodiments without departing from the scope or spirit of the main characteristics of the present invention. Some examples of possible modification are given below.

### I1. Modified Example 1

In the fuel cell stacks of the above embodiments, the anode-facing plate has the multiple inlets 161 to supply the water flowing through the water supply manifold to the anodes in a two-dimensionally distributed manner. This structure is, however, not restrictive. In one modification, the water flowing through the water supply manifold may be supplied to the cathodes in a two-dimensionally distributed manner. In this modified structure, the cathode-facing plate may have multiple through holes as multiple inlets arranged at substantially equal intervals in a specific area corresponding to the power generation area and at positions corresponding to the communicating channels 151 formed in the middle plate 133. This modified arrangement enables water to be supplied across the cathode to the electrolyte membrane 120 in a two-dimensionally distributed manner and thus ensures the substantially homogeneous supply of water over the whole surface of the electrolyte membrane 120. Such homogeneous supply of water effectively prevents the electrolyte membrane 120 from being locally dried and thereby prevents deterioration of the cell performance of the fuel cell stack 100. In some operating condition of the fuel cell stack 100 causing evaporation of the water supply, the fuel cell stack 100 is cooled down by the latent heat of the water evaporation.

### I2. Modified Example 2

In the fuel cell stack 100G of the seventh embodiment, the power generation is performed with the shut valve 590 closed to prohibit discharge of the anode off gas outside of the fuel cell stack 100G. This structure is, however, not restrictive. In one modification, the through holes 143 (constituting the fuel gas exhaust manifold) and the pipe 517 may be omitted from the structure of the fuel cell stack 100G. In this modified structure, in order to prevent accumulation of nitrogen and other impurities possibly leaked from the cathodes 124 to the anodes, high-concentration oxygen may be supplied as the oxidizing gas to the cathodes 124.

## Claims

1. A fuel cell stack having a stack structure of multiple cell laminates stacked via separators, where each cell laminate has an anode and a cathode formed on opposed faces of a proton-conductive electrolyte membrane,
the separator including:
an anode-facing plate opposed to the anode of the cell laminate; and
a cathode-facing plate opposed to the cathode of the cell laminate,
wherein at least one of the anode-facing plate and the cathode-facing plate has multiple reactive gas inlets formed to penetrate the plate in a thickness direction and arranged to supply a preset reactive gas to a surface of each cell laminate in a direction substantially perpendicular to the surface of the cell laminate, and
the multiple reactive gas inlets are arranged in a two-dimensionally distributed manner on a plate surface of the at least one of the anode-facing plate and the cathode-facing plate.

2. The fuel cell stack in accordance with claim 1, wherein the multiple reactive gas inlets are arranged at substantially equal intervals in a specific area corresponding to a power generation area of the cell laminates on the plate surface of the at least one of the anode-facing plate and the cathode-facing plate.

3. The fuel cell stack in accordance with claim 2, wherein the multiple reactive gas inlets have different opening areas in such a manner that a reactive gas inlet receiving a supply of the reactive gas from a more downstream side of a reactive gas supply flow path has a wider opening area.

4. The fuel cell stack in accordance with claim 1, wherein the multiple reactive gas inlets have a substantially identical opening area, and
the multiple reactive gas inlets are arranged at different densities in such a manner that reactive gas inlets receiving a supply of the reactive gas from a more downstream side of a reactive gas supply flow path are formed at a higher density.

5. The fuel cell stack in accordance with any one of claims 1 through 4, wherein the separator further includes a middle plate located between the anode-facing plate and the cathode-facing plate, and
the middle plate has a reactive gas supply flow channel formed to define a reactive gas supply flow path for supplying the reactive gas in a distributed manner into the multiple reactive gas inlets by sequential lamination of the anode-facing plate, the middle plate, and the cathode-facing plate.

6. The fuel cell stack in accordance with claim 5, wherein the middle plate has a cooling medium flow channel formed to define a cooling medium flow path for allowing flow of a cooling medium to cool down the fuel cell stack by sequential lamination of the anode-facing plate, the middle plate, and the cathode-facing plate.

7. The fuel cell stack in accordance with claim 6, wherein one single middle plate has both the reactive gas supply flow channel and the cooling medium flow channel.

8. The fuel cell stack in accordance with any one of claims 5 through 7, wherein the at least one of the anode-facing plate and the cathode-facing plate with the multiple reactive gas inlets further has an exhaust gas outlet formed to penetrate the plate in the thickness direction and discharge an exhaust gas, which is a remaining gas unused for power generation in the reactive gas supplied through the multiple reactive gas inlets, in the direction perpendicular to the surface of the cell laminate, and
the middle plate has an exhaust gas discharge flow channel formed to define an exhaust gas discharge flow path for discharging the exhaust gas out of the fuel cell stack from the exhaust gas outlet by sequential lamination of the anode-facing plate, the middle plate, and the cathode-facing plate.

9. The fuel cell stack in accordance with claim 8, wherein the multiple reactive gas inlets and the exhaust gas outlet are provided in the anode-facing plate, and
the exhaust gas is not discharged out of the fuel cell stack from the exhaust gas outlet at least during power generation.

10. The fuel cell stack in accordance with any one of claims 1 through 7, wherein the multiple reactive gas inlets are provided in the cathode-facing plate, and
the reactive gas supplied through the multiple reactive gas inlets is substantially fully used for power generation without being discharged out of the fuel cell stack.

11. The fuel cell stack in accordance with any one of claims 1 through 10, wherein each of the cell laminates has a gas diffusion layer of a porous material on at least a cathode-side face of the cell laminate to diffusively flow the reactive gas in a direction along the cathode-side face.

12. A fuel cell stack having a stack structure of multiple cell laminates stacked via separators, where each cell laminate has an anode and a cathode formed on opposed faces of an electrolyte membrane made of a solid polymer material,
the separator including:
an anode-facing plate opposed to the anode of the cell laminate; and
a cathode-facing plate opposed to the cathode of the cell laminate,
wherein at least one of the anode-facing plate and the cathode-facing plate has multiple water inlets formed to penetrate the plate in a thickness direction and arranged to supply water to a surface of each cell laminate in a direction substantially perpendicular to the surface of the cell laminate, and
the multiple water inlets are arranged in a two-dimensionally distributed manner on a plate surface of the at least one of the anode-facing plate and the cathode-facing plate.

13. The fuel cell stack in accordance with claim 12, wherein the separator further includes a middle plate located between the anode-facing plate and the cathode-facing plate, and
the middle plate has a water supply flow channel formed to define a water supply flow path for supplying the water in a distributed manner into the multiple water inlets by sequential lamination of the anode-facing plate, the middle plate, and the cathode-facing plate.

14. The fuel cell stack in accordance with claim 13, wherein the middle plate has a cooling medium flow channel formed to define a cooling medium flow path for allowing flow of a cooling medium to cool down the fuel cell stack by sequential lamination of the anode-facing plate, the middle plate, and the cathode-facing plate.

15. The fuel cell stack in accordance with claim 14, wherein the cooling medium flow channel also works as the water supply flow channel.

16. The fuel cell stack in accordance with any one of claims 13 through 15, wherein the at least one of the anode-facing plate and the cathode-facing plate with the multiple water inlets further has multiple reactive gas inlets formed to penetrate the plate in the thickness direction and arranged to supply a preset reactive gas to the surface of the cell laminate in the direction substantially perpendicular to the surface of the cell laminate,
the middle plate has a reactive gas supply flow channel formed to define a reactive gas supply flow path for supplying the reactive gas in a distributed manner into the multiple reactive gas inlets by sequential lamination of the anode-facing plate, the middle plate, and the cathode-facing plate, and
the multiple reactive gas inlets are arranged in a two-dimensionally distributed manner on the plate surface of the at least one of the anode-facing plate and the cathode-facing plate.

17. The fuel cell stack in accordance with claim 16, wherein the multiple water inlets and the multiple reactive gas inlets are provided in the anode-facing plate, and
power generation is performed with the fuel gas supply to the surface of the cell laminate not discharged out of the fuel cell stack but retained inside.

18. The fuel cell stack in accordance with any one of claims 12 through 17, wherein the multiple water inlets are arranged at substantially equal intervals on the plate surface of the at least one of the anode-facing plate and the cathode-facing plate.

19. The fuel cell stack in accordance with any one of claims 12 through 18, wherein the multiple water inlets are provided in the anode-facing plate.

20. The fuel cell stack in accordance with any one of claims 1 through 19, wherein the anode-facing plate and the cathode-facing plate are both flat plate members.
